# EUROPEAN PATENT APPLICATION

(11) **EP 4 807 513 A1**
(43) Date of publication of application: **16.09.2026**
(21) Application number: 24903924.9
(22) Date of filing: 16.10.2024
(51) Int. Cl.: G06F 3/0484, G06F 3/0481, G06V 30/10, G06N 20/00, G06K 7/14, H04W 4/80, H04W 4/021, G06F 16/583, G06F 16/58, G06F 16/55

(54) **ELECTRONIC DEVICE FOR PROVIDING INFORMATION GENERATED ON BASIS OF IMAGE**

(30) Priority: 12.12.2023 KR 20230180203; 02.01.2024 KR 20240000620; 19.01.2024 KR 20240009135
(71) Applicant: Samsung Electronics Co., Ltd., Suwon-si, Gyeonggi-do 16677 (KR)
(72) Inventor: GU, Jiseong, Suwon-si Gyeonggi-do 16677 (KR); KANG, Seungseok, Suwon-si Gyeonggi-do 16677 (KR); KIM, Heewon, Suwon-si Gyeonggi-do 16677 (KR); KIM, Sangheon, Suwon-si Gyeonggi-do 16677 (KR); LIM, Yeunwook, Suwon-si Gyeonggi-do 16677 (KR); JO, Sangjeong, Suwon-si Gyeonggi-do 16677 (KR)
(74) Representative: Gulde & Partner
(86) International application number: PCT/KR2024/015680
(87) International publication number: WO 2025/127357

(57) **Abstract**

An electronic device according to an embodiment may comprise a display, a memory for storing instructions, and a processor. The instructions, when executed by the processor, may cause the electronic device to: display, via the display, a still image including one or more image objects corresponding to text; acquire text information corresponding to the one or more image objects in the still image on the basis of an input for analyzing the still image being displayed; select a designated application corresponding to the still image from among a plurality of applications by using at least a portion of the text information; display, via the display, a screen including the still image and a visual object for launching the designated application; and, in response to an input related to the visual object, display a launch screen of the designated application via the display.

## Description

### [Technical Field]

The following descriptions relate to an electronic device for providing information generated based on an image.

### [Background Art]

An electronic device such as a smartphone may store an image file. For example, the electronic device may store an image obtained through a camera, a screenshot image capturing a screen being displayed through a display, and an image downloaded from an external source. The electronic device may provide an application for a user to view or manage these images.

The above-described information may be provided as a related art for a purpose of helping understanding of the present disclosure. No claim or determination is raised as to whether any of the above-described descriptions may be applied as a prior art related to the present disclosure.

### [Disclosure]

### [Technical Solution]

An electronic device according to an embodiment may include a display, memory storing instructions, and a processor. The instructions, when executed by the processor, may cause the electronic device to display, through the display, a still image including one or more image objects corresponding to text. The instructions, when executed by the processor, may cause the electronic device to, based on an input for analyzing the still image being displayed, obtain text information corresponding to the one or more image objects of the still image. The instructions, when executed by the processor, may cause the electronic device to select a designated application corresponding to the still image from among a plurality of applications, using at least a portion of the text information. The instructions, when executed by the processor, may cause the electronic device to display a screen including a visual object for executing the designated application and the still image through the display. The instructions, when executed by the processor, may cause the electronic device to, in response to an input related to the visual object, display an execution screen of the designated application through the display.

An electronic device according to an embodiment may include a display, memory storing instructions, and a processor. The instructions, when executed by the processor, may cause the electronic device to display, through the display, a screenshot image. The instructions, when executed by the processor, may cause the electronic device to, based on an input for analyzing the screenshot image being displayed, obtain text information corresponding to the screenshot image. The instructions, when executed by the processor, may cause the electronic device to, based on identifying an application corresponding to the screenshot image using the text information, display a window including a visual object for executing the application, through the display, partially overlapping the screenshot image. The instructions, when executed by the processor, may cause the electronic device to, based on identifying an application corresponding to the screenshot image using the text information, in response to an input related to the visual object, display an execution screen of the application through the display.

An electronic device according to an embodiment may include a display, memory storing instructions, and a processor. The instructions, when executed by the processor, may cause the electronic device to display a first screen including an image through the display. The instructions, when executed by the processor, may cause the electronic device to extract text from the image by performing optical character recognition (OCR). The instructions, when executed by the processor, may cause the electronic device to obtain text information corresponding to the image from an artificial intelligence model into which the extracted text is inputted. The instructions, when executed by the processor, may cause the electronic device to identify a category of the image using the text information. The instructions, when executed by the processor, may cause the electronic device to, based on identifying an application corresponding to the identified category, display a second screen that includes the image and a visual object for executing the application. The instructions, when executed by the processor, may cause the electronic device to, in response to an input related to the visual object, display a third screen different from the second screen by executing the application.

A non-transitory computer readable storage medium according to an embodiment may store one or more programs. The one or more programs may include instructions that, when executed by an electronic device including a display, cause the electronic device to display, through the display, a still image including one or more image objects corresponding to text. The one or more programs may include instructions that, when executed by the electronic device, cause the electronic device to, based on an input for analyzing the still image being displayed, obtain text information corresponding to the one or more image objects of the still image. The one or more programs may include instructions that, when executed by the electronic device, cause the electronic device to select a designated application corresponding to the still image from among a plurality of applications, using at least a portion of the text information. The one or more programs may include instructions that, when executed by the electronic device, cause the electronic device to display a screen including a visual object for executing the designated application and the still image through the display. The one or more programs may include instructions that, when executed by the electronic device, cause the electronic device to, in response to an input related to the visual object, display an execution screen of the designated application through the display.

A non-transitory computer readable storage medium according to an embodiment may store one or more programs. The one or more programs may include instructions that, when executed by an electronic device including a display, cause the electronic device to display, through the display, a screenshot image. The one or more programs may include instructions that, when executed by the electronic device, cause the electronic device to, based on an input for analyzing the screenshot image being displayed, obtain text information corresponding to the screenshot image. The one or more programs may include instructions that, when executed by the electronic device, cause the electronic device to, based on identifying an application corresponding to the screenshot image using the text information, display a window including a visual object for executing the application, through the display, partially overlapping the screenshot image. The one or more programs may include instructions that, when executed by the electronic device, cause the electronic device to, based on identifying an application corresponding to the screenshot image using the text information, in response to an input related to the visual object, display an execution screen of the application through the display.

A non-transitory computer readable storage medium according to an embodiment may store one or more programs. The one or more programs may include instructions that, when executed by an electronic device including a display, cause the electronic device to display a first screen including an image through the display. The one or more programs may include instructions that, when executed by the electronic device, cause the electronic device to extract text from the image by performing optical character recognition (OCR). The one or more programs may include instructions that, when executed by the electronic device, cause the electronic device to obtain text information corresponding to the image from an artificial intelligence model into which the extracted text is inputted. The one or more programs may include instructions that, when executed by the electronic device, cause the electronic device to identify a category of the image using the text information. The one or more programs may include instructions that, when executed by the electronic device, cause the electronic device to, based on identifying an application corresponding to the identified category, display a second screen that includes the image and a visual object for executing the application. The one or more programs may include instructions that, when executed by the electronic device, cause the electronic device to, in response to an input related to the visual object, display a third screen different from the second screen by executing the application.

According to an embodiment, a method of an electronic device including a display may include displaying, through the display, a still image including one or more image objects corresponding to text. The method may include, based on an input for analyzing the still image being displayed, obtaining text information corresponding to the one or more image objects of the still image. The method may include selecting a designated application corresponding to the still image from among a plurality of applications, using at least a portion of the text information. The method may include displaying a screen including a visual object for executing the designated application and the still image through the display. The method may include, in response to an input related to the visual object, displaying an execution screen of the designated application through the display.

According to an embodiment, a method of an electronic device including a display may include displaying, through the display, a screenshot image. The method may include, based on an input for analyzing the screenshot image being displayed, obtaining text information corresponding to the screenshot image. The method may include, based on identifying an application corresponding to the screenshot image using the text information, displaying a window including a visual object for executing the application, through the display, partially overlapping the screenshot image. The method may include, based on identifying an application corresponding to the screenshot image using the text information, in response to an input related to the visual object, displaying an execution screen of the application through the display.

According to an embodiment, a method of an electronic device including a display may include displaying a first screen including an image through the display. The method may include extracting text from the image by performing optical character recognition (OCR). The method may include obtaining text information corresponding to the image from an artificial intelligence model into which the extracted text is inputted. The method may include identifying a category of the image using the text information. The method may include, based on identifying an application corresponding to the identified category, displaying a second screen that includes the image and a visual object for executing the application. The method may include, in response to an input related to the visual object, displaying a third screen different from the second screen by executing the application.

### [Description of the Drawings]

FIG. 1 is a block diagram of an electronic device in a network environment according to various embodiments.
FIG. 2A illustrates examples of a screen displayed by an electronic device according to an embodiment.
FIG. 2B illustrates examples of a screen displayed by an electronic device according to an embodiment.
FIG. 2C illustrates an example of a screen displayed by an electronic device according to an embodiment.
FIG. 3A illustrates an example of a screen displayed by an electronic device according to an embodiment.
FIG. 3B illustrates an example of a screen displayed by an electronic device according to an embodiment.
FIG. 3C illustrates an example of a screen displayed by an electronic device according to an embodiment.
FIG. 3D illustrates an example of a screen displayed by an electronic device according to an embodiment.
FIG. 4A illustrates an example of a screen displayed by an electronic device according to an embodiment.
FIG. 4B illustrates an example of a screen displayed by an electronic device according to an embodiment.
FIG. 4C illustrates an example of a screen displayed by an electronic device according to an embodiment.
FIG. 4D illustrates an example of a screen displayed by an electronic device according to an embodiment.
FIG. 5A illustrates an example of a screen displayed by an electronic device according to an embodiment.
FIG. 5B illustrates an example of a screen displayed by an electronic device according to an embodiment.
FIG. 5C illustrates an example of a screen displayed by an electronic device according to an embodiment.
FIG. 5D illustrates an example of a screen displayed by an electronic device according to an embodiment.
FIG. 6 illustrates an example of a screen displayed by an electronic device according to an embodiment.
FIG. 7 is a diagram representing an example of a screen displayed by an electronic device according to an embodiment.
FIG. 8 is a diagram representing an example of a screen displayed by an electronic device according to an embodiment.
FIG. 9 illustrates an example of a signal flow for a method of providing a function associated with text information generated based on an image, according to an embodiment.
FIG. 10 is a flowchart representing a method of providing a function associated with text information generated based on an image, according to an embodiment.
FIG. 11 illustrates examples of an exemplary screen of an electronic device according to an embodiment.
FIG. 12A illustrates an example of an exemplary screen of an electronic device according to an embodiment.
FIG. 12B illustrates an example of an exemplary screen of an electronic device according to an embodiment.
FIG. 13 illustrates an example of an exemplary screen of an electronic device according to an embodiment.
FIG. 14A illustrates an example of a screen displayed by an electronic device according to an embodiment.
FIG. 14B illustrates an example of a screen displayed by an electronic device according to an embodiment.
FIG. 14C illustrates an example of a screen displayed by an electronic device according to an embodiment.
FIG. 14D illustrates an example of a screen displayed by an electronic device according to an embodiment.
FIG. 14E illustrates an example of a screen displayed by an electronic device according to an embodiment.
FIG. 15 is an exemplary block diagram representing a generative artificial intelligence system according to an embodiment.

### [Mode for Invention]

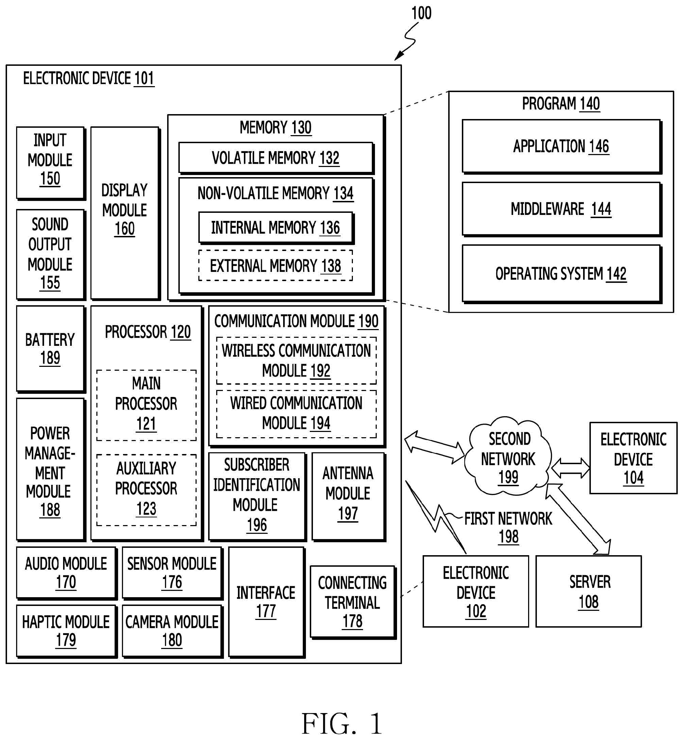

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

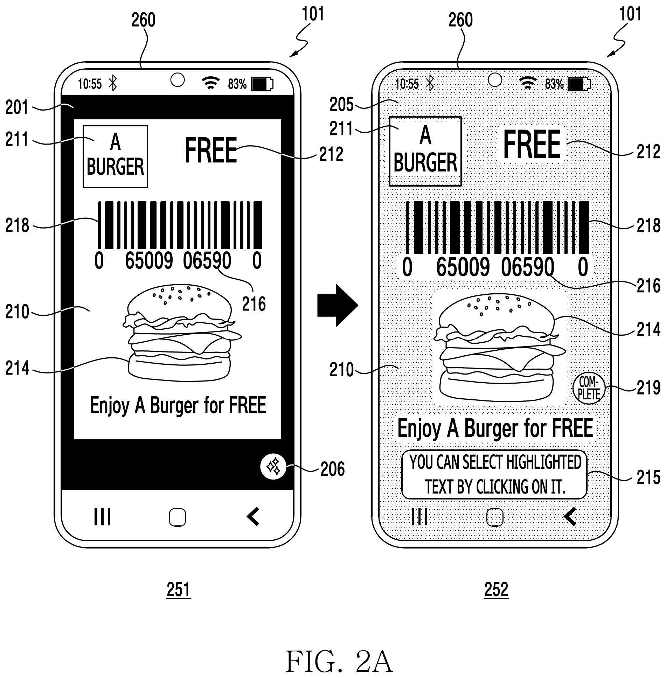

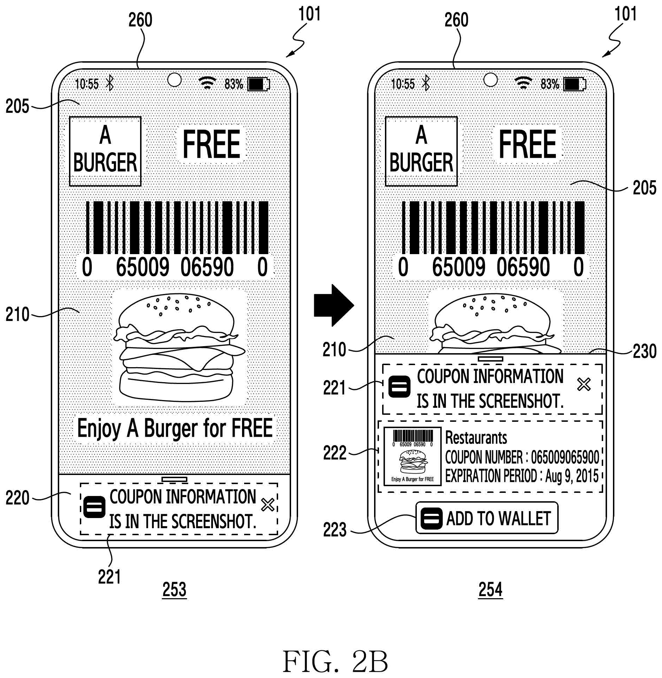

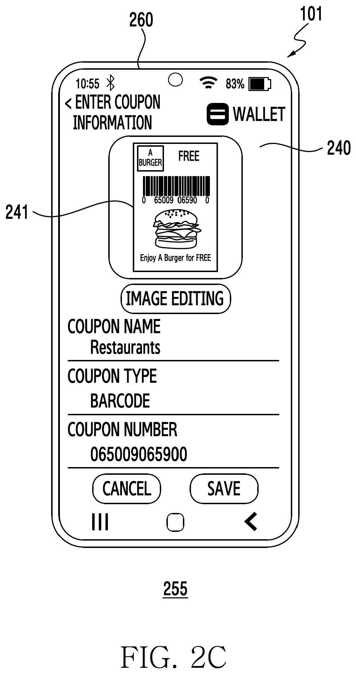

FIGS. 2A, 2B, and 2C illustrate examples of a screen displayed by an electronic device according to an embodiment. An electronic device 101 of FIGS. 2A, 2B, and 2C may be an example of the electronic device 101 of FIG. 1. For example, a display 260 of FIGS. 2A, 2B, and 2C may include at least a portion of the display module 160 of FIG. 1.

In FIGS. 2A, 2B, and 2C, examples 251, 252, 253, and 254 of a method in which the electronic device 101 performs a function related to content in the image through image analysis are illustrated.

Referring to the example 251, the electronic device 101 may display a screen 201 through the display 260. The screen 201 may include an image 210. The image 210 may include, for example, a still image, such as an image captured by a camera or an image downloaded or received from the outside. The image 210 may include, for example, a screenshot image (or a capture image). The screenshot image may include an image classified as a screenshot image. For example, the screenshot image may be an image including a flag value indicating that it is a screenshot image. As a non-limiting example, the electronic device 101 may obtain the captured image 210 in response to receiving an input for capturing the screen 201 being displayed through the display 260, and classify the image as the screenshot image. The screen 201 being displayed through the display 260 may include an execution screen of various applications such as a social network service (SNS), a message, a wallet, a screen capture application, and an application for playing a picture or a video.

The image 210 may be distinguished from a preview image obtained through the camera (e.g., the camera module 180 of FIG. 1) of the electronic device 101. For example, the image 210 may be in a state that substantially the same object may be displayed again through the display 260 based on selection of the user or some functions of the electronic device 101, by temporarily, permanently or semi-permanently being stored in a volatile memory (e.g., the volatile memory 132 of FIG. 1) or a nonvolatile memory (e.g., the nonvolatile memory 134 of FIG. 1) of the electronic device 101.

In an embodiment, the image 210 may include a coupon image. The image 210 may include image objects representing content of the coupon image. As a non-limiting example, the image 210 may include image objects 211, 212, 214, 216, and 218. For example, the image objects 211, 212, and 216 may correspond to text. For example, the image objects 214 and 218 may correspond to non-text. For example, the image object 211 may represent a name of a product included in the coupon image. For example, the image object 212 may represent an attribute of the product, such as 'FREE'. Although not illustrated, the image 210 may include one or more image objects representing a category (e.g., food), a subcategory (e.g., a hamburger), a performance, and a function as an attribute of the product. For example, the image object 214 may represent a shape of the product. For example, the image object 216 may represent a coupon number. For example, the image object 218 may represent an image code of a coupon. As a non-limiting example, the image code may include an imaged code such as a QR code, a barcode, or a color code.

In an embodiment, the screen 201 may include a visual object 206 for performing recognition of the image 210 and/or displaying a recognition result for the image 210. For example, the electronic device 101 may obtain text corresponding to the image 210 based on receiving a user input to the visual object 206. For example, the electronic device 101 may extract text corresponding to the image objects 211, 212, 214, 216, and 218 included in the image 210 by performing optical character recognition (OCR) on the image 210. However, a method for extracting the text is not limited to the above-described OCR, and various techniques may be used.

In an embodiment, it has been described that the electronic device 101 obtains text corresponding to the image 210 based on a user input to the visual object 206, but is not limited thereto. For example, the electronic device 101 may extract text included in a screen being displayed through the display 260 before receiving the user input to the visual object 206. For example, before receiving the user input to the visual object 206, the electronic device 101 may extract texts included in the image 210. For example, the electronic device 101 may obtain text corresponding to the image objects 211, 212, 214, 216, and 218 included in the image 210 based on obtaining the image 210 (e.g., capturing a screen including the image 210) and/or displaying the screen 201 including the image 210. In this case, the electronic device 101 may display a screen 205 for representing the texts extracted from the image 210 in response to the user input to the visual object 206.

Additionally or optionally, the visual object 206 may be selectively displayed according to an image being displayed in the electronic device 101. For example, the electronic device 101 may identify whether the coupon image such as the image 210 is being displayed through the screen 201. The electronic device 101 may identify that the image 210 is being displayed through the screen 201, and may display the visual object 206. The electronic device 101 may identify that another image different from the coupon image is being displayed through the screen 201, and may not display the visual object 206.

Referring to the example 252, the electronic device 101 may display the screen 205 based on receiving the user input to the visual object 206. The screen 205 may include the image 210. In an embodiment, the electronic device 101 may highlight and display the image objects 211, 212, 214, 216, and 218 identified through recognition of the image 210 through the screen 205. In the example 252, an example in which regions corresponding to the identified image objects 211, 212, 214, 216, and 218 are displayed brighter than another region of the screen 205 is illustrated, but is not limited thereto.

In an embodiment, the screen 205 may include a visual object 215 indicating that the identified image objects 211, 212, 214, 216, and 218 may be selected. Through an input to each of the identified image objects 211, 212, 214, 216, and 218, at least some of the identified image objects 211, 212, 214, 216, and 218 may be selected.

In an embodiment, the electronic device 101 may obtain text information corresponding to the image 210 based on an input to a visual object 219 of the screen 205 for completing selection of the identified image objects 211, 212, 214, 216, and 218. The text information may include category information of the image 210, content information of the image 210, and summary information on the content information. The category information of the image 210 may include, for example, information indicating a subject (e.g., a coupon) of the image 210. The content information of the image 210 is information on content included in the image 210, and may include, for example, at least one of a brand of a coupon provider, a coupon code (e.g., an identification number of a coupon or a barcode number), content provided by the coupon, a start date and time, an expiration date and time, a usage method, and a restriction. The summary information may be information briefly summarizing the content information. In an embodiment, it has been described that the electronic device 101 obtains the text information based on the input to the visual object 219, but is not limited thereto. For example, the electronic device 101 may obtain the text information based on an input to the visual object 206 of the screen 201. For another example, the electronic device 101 may obtain text information corresponding to the image 210 by selecting at least some of the identified image objects 211, 212, 214, 216, and 218 without the input to the visual object 219. For another example, the electronic device 101 may obtain the text information in the image 210 based on obtaining the image 210 (e.g., through capture of a screen including the image 210), and/or displaying the screen 201 including the image 210.

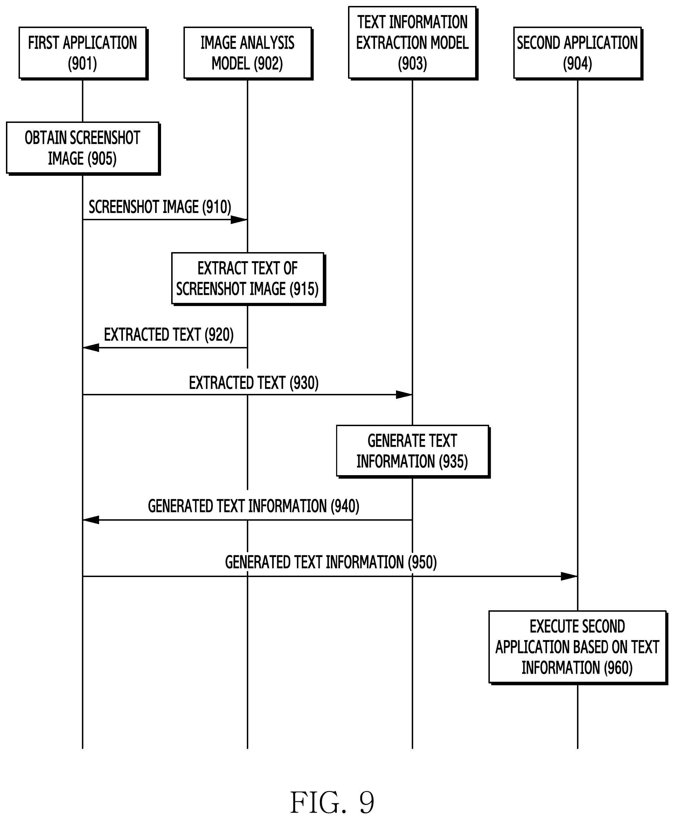

For example, the electronic device 101 may obtain the text information corresponding to the image 210 from an artificial intelligence model (e.g., a text information extraction model 903 of FIG. 9), to which the extracted text from the identified image objects 211, 212, 214, 216, and 218 and a prompt are inputted. The prompt may be a command formed of natural language for determining a category from the extracted text and generating information (e.g., the content information and the summary information) corresponding to the determined category in a designated format. For example, the artificial intelligence model may output the text information in a designated data format, such as javaScript object notation (JSON), in response to a prompt. As a non-limiting example, the artificial intelligence model may include a plurality of parameters for driving a neural network, such as bidirectional encoder representations from transformers (BERTs) and/or a generative pre-trained transformer (GPT). As a non-limiting example, the artificial intelligence model may include a large language model (LLM) for processing natural language based on massive parameters.

In an embodiment, in a case that only some of the identified image objects 211, 212, 214, 216, and 218 are selected through an input to the screen 205, the electronic device 101 may obtain the text information based on the selected image objects. For example, the electronic device 101 may obtain the text information corresponding to the image 210 from an artificial intelligence model, to which a text extracted from image objects selected from among the identified image objects 211, 212, 214, 216, and 218 and a prompt are inputted. Additionally, in order for the electronic device 101 to obtain the text information, the image 210 together with the extracted text may be inputted to the artificial intelligence model.

In an embodiment, the electronic device 101 may identify a category of the image 210 by using the text information. For example, the electronic device 101 may identify the category of the image 210 by using the category information of the image 210 included in the text information.

Referring to the example 253 of FIG. 2B, the electronic device 101 may display a screen (or a window) 220 through the display 260. For example, the electronic device 101 may display the screen 220 together with the screen 205. For example, the electronic device 101 may display the screen 220 with a partial overlap of the screen 205 through the display 260, but is not limited thereto. For example, the electronic device 101 may display the screen 205 having a first size in a partial region of an entire display region of the display 260 and the screen 220 having a second size smaller than the first size in a remaining region. For example, the screen 220 may be displayed as a split or a pop-up of the screen 205.

In an embodiment, the screen 220 may include a visual object 221 representing the category information of the image 210. The visual object 221 may correspond to text such as 'Coupon information is in the screenshot', but is not limited thereto. For example, the screen 220 may include an icon related to a category of the image 210. In an embodiment, the electronic device 101 may display the screen 220 based on checking an application corresponding to the category of the image 210. As a non-limiting example, the application corresponding to the coupon, which is the category of the image 210, may include an application for managing the coupon, such as a wallet application. For another example, the application corresponding to the coupon may include a payment application that supports payment using technology such as near field communication (NFC) or magnetic secure transmission (MST).

Referring to the example 254, in an embodiment, the electronic device 101 may display a screen (or a window) 230 through the display 260. For example, the electronic device 101 may display the screen 230 together with the screen 205. For example, the electronic device 101 may display the screen 230 through the display 260 in response to receiving an input (e.g., a touch input or a swipe-up gesture) to the visual object 221 of the screen 220. The screen 230 may have a size larger than the screen 220, and may be displayed on the screen 205 by partially overlapping, but is not limited thereto. For example, the screen 230 may be displayed as a split or a pop-up of the screen 205. For example, the electronic device 101 may display the screen 205 in a partial region of an entire display region of the display 260 and display the screen 230 smaller than the screen 205 and larger than the screen 220 in a remaining region. In an embodiment, it has been described that the screen 230 is displayed by the input to the visual object 221 of the screen 220, but is not limited thereto. For example, the screen 230 may be displayed after a predetermined time elapses after the screen 220 is displayed. As another example, the display of the screen 220 may be omitted, and the screen 230 may be displayed. For example, the example 253 of FIG. 2B may be omitted.

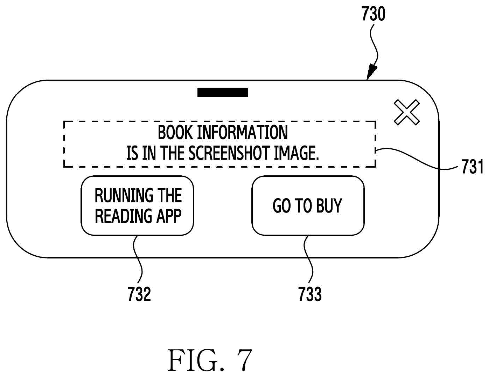

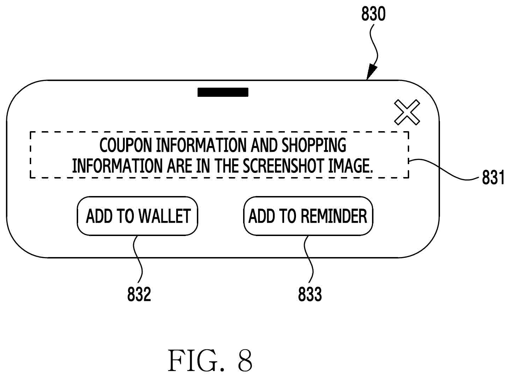

In an embodiment, the screen 230 may include the visual object 221 representing the category information of the image 210, a visual object 222 representing at least a portion of the summary information, and a visual object 223 for executing the application corresponding to the image 210. Although FIG. 2B illustrates that the visual object 223 is displayed, it is not limited thereto. For example, in a case that there are a plurality of applications corresponding to the image 210, such as visual objects 732 and 733 of FIG. 7, a plurality of visual objects 223 for executing them may also be displayed. For example, in a case that there are a plurality of categories corresponding to the image 210, such as visual objects 832 and 833 of FIG. 8, visual objects for executing applications (e.g., a wallet application and a schedule application) corresponding to each of the plurality of categories may be displayed. As a non-limiting example, the visual object 221 may be displayed in a first region of the screen 230, the visual object 222 may be displayed in a second region of the screen 230, and the visual object 223 may be displayed in a third region of the screen 230. As a non-limiting example, the second region may be located between the first region and the third region. As a non-limiting example, based on the illustration of FIG. 2B, the third region may be located below the first region and the second region. In an embodiment, the electronic device 101 may display the screen 230 based on checking an application corresponding to the category of the image 210.

It has been described that the screen 230 including the visual object 223 is displayed by a user input to the screen 220, but is not limited thereto. For example, the electronic device 101 may display, through the display 260, the visual object 223 or another screen including it instead of the screen 220 or the screen 230 based on obtaining the text information on the image 210 (e.g., displayed together with the screen 201 or the screen 205 including the image 210).

Referring to an example 255 of FIG. 2C, in an embodiment, the electronic device 101 may display a screen 240 different from the screen 230 through the display 260 in response to receiving an input related to the visual object 223. For example, the electronic device 101 may display the screen 240 by executing the application corresponding to the image 210. The screen 240 may include an execution screen of the application. For example, the screen 240 may include an execution screen capable of performing a function of the application corresponding to the category of the image 210. For example, the screen 240 may include an execution screen of the application capable of storing the coupon of the image 210.

In an embodiment, the electronic device 101 may execute the application based at least in part on the text information corresponding to the image 210. For example, in response to the input to the visual object 223, the electronic device 101 may display the screen 240 in a state in which at least a portion of the text information is inputted into an input field of an execution screen of the application. For example, text information corresponding to objects selected from among the image objects 211, 212, 214, 216, and 218 may be inputted to the input field of the execution screen of the application, but is not limited thereto.

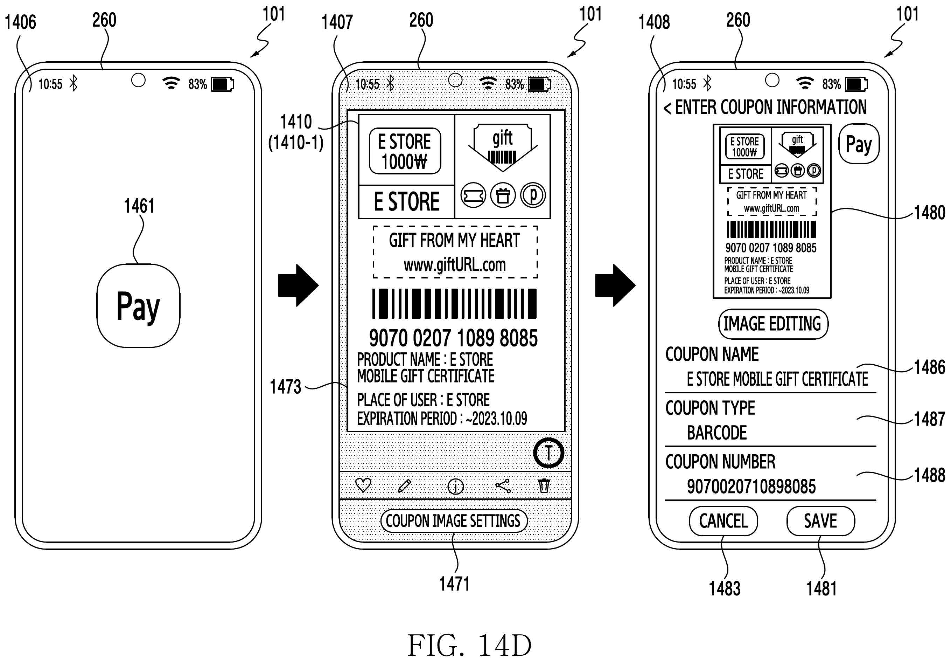

Additionally, the electronic device 101 may display the screen 240 in a state to which the image 210 is attached, such as an image 241, in response to the input to the visual object 223. Additionally, before the screen 240 is displayed, a screen for the user to designate at least a partial region of the image 210 may be provided, such as a screen 1407 of FIG. 14D. In this case, the electronic device 101 may display the screen 240 to which the image 241 corresponding to a designated region of the image 210 is attached.

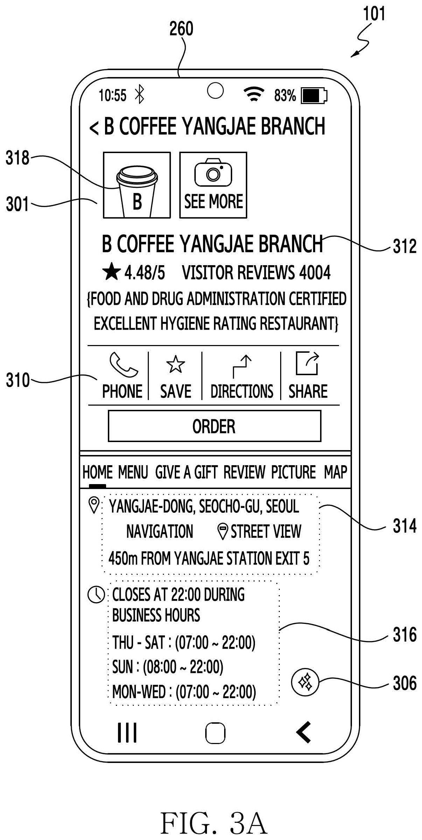

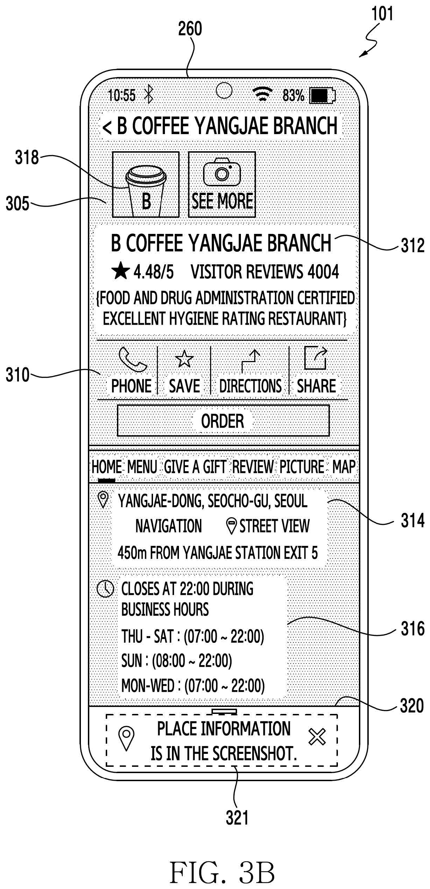

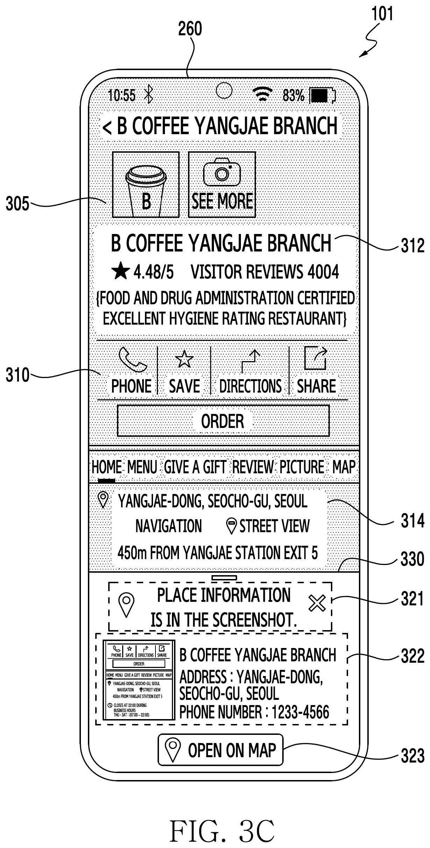

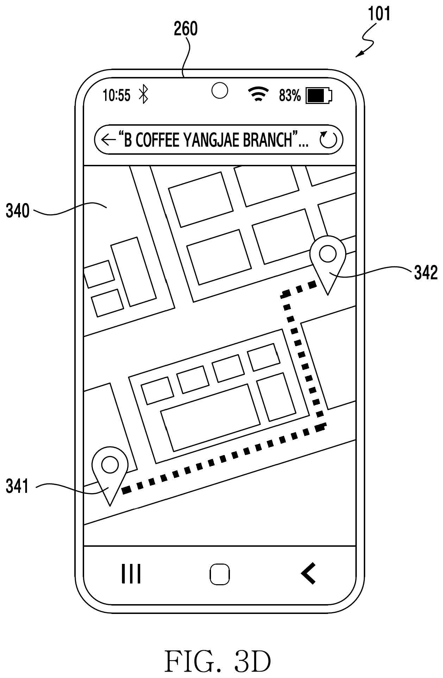

FIGS. 3A, 3B, 3C, and 3D illustrate examples of a screen displayed by an electronic device according to an embodiment. An electronic device 101 of FIGS. 3A, 3B, 3C, and 3D may be an example of the electronic device 101 of FIG. 1.

In FIGS. 3A, 3B, 3C, and 3D, examples of a method in which the electronic device 101 performs a function related to content in an image through analysis of the image are illustrated.

Referring to FIG. 3A, the electronic device 101 may display a screen 301 through a display 260. The screen 301 may include an image 310. The image 310 may include, for example, a still image and/or a screenshot image. As a non-limiting example, in a case that the image 310 is the screenshot image, the electronic device 101 may obtain the image 310 in response to receiving an input for capturing the screen 301 being displayed through the display 260. In an embodiment, the image 310 may be an image different from the image 210 of FIG. 2A. As described later, the image 310 may be an image classified into a different category from the image 210. The screen 301 being displayed through the display 260 may include an execution screen of various applications such as an SNS, a message, a wallet, a screen capture application, and an application for playing a picture or a video.

The image 310 may be distinguished from a preview image obtained through a camera (e.g., the camera module 180 of FIG. 1) of the electronic device 101. For example, the image 310 may be temporarily, permanently or semi-permanently stored in the volatile memory or the nonvolatile memory of the electronic device 101, and may be in a state that substantially the same object may be displayed again through the display 260 based on selection of a user or some functions of the electronic device 101.

In an embodiment, the image 310 may include an image representing a specific area (or place). In FIG. 3A, it has been illustrated that the image 310 represents information on a specific restaurant, but is not limited by the illustrated example.

The image 310 may include image objects representing content in the image 310. For example, the image 310 may include image objects for describing the specific area. As a non-limiting example, the image 310 may include image objects 312, 314, 316, and 318. For example, the image objects 312, 314, and 316 may correspond to text. For example, the image object 318 may correspond to non-text. For example, the image object 312 may represent a name of a specific place, such as a 'B coffee Yangjae branch'. For example, the image object 314 may represent an address of the specific place. For example, the image object 316 may represent an operating day and time of the specific place. For example, the image object 318 may represent a logo image of the specific place.

In an embodiment, the screen 301 may include a visual object 306 (e.g., a visual object 206) for performing recognition of the image 310 and/or displaying a recognition result for the image 310. For example, the electronic device 101 may obtain text corresponding to the image 310 based on receiving a user input to the visual object 306. For example, the electronic device 101 may identify the image objects 312, 314, 316, and 318 included in image 310 and extract text corresponding to the image objects 312, 314, 316, and 318 by performing OCR on the image 310. However, a method for extracting the text is not limited to the above-described OCR, and various techniques may be used.

In an embodiment, it has been described that the electronic device 101 obtains text corresponding to the image 310 based on a user input to the visual object 306, but is not limited thereto. For example, the electronic device 101 may extract text included in the image 310 based on obtaining the image 310 (e.g., capturing a screen including the image 310) and/or displaying the screen 301 including the image 310. In this case, the electronic device 101 may display a screen 305 for representing the texts extracted from the image 310 in response to a user input to the visual object 306. Additionally or optionally, the visual object 306 may be selectively displayed according to an image being displayed in the electronic device 101. For example, the electronic device 101 may identify whether an image representing a specific place such as the image 310 is being displayed through the screen 301. The electronic device 101 may identify that the image 310 is being displayed through the screen 301, and may display the visual object 306. The electronic device 101 may identify that another image different from the image representing the specific place is being displayed through the screen 301, and may not display the visual object 306.

In an embodiment, the electronic device 101 may obtain text information corresponding to the image 310. For example, the electronic device 101 may obtain the text information corresponding to the image 310 based on an input to the visual object 306 of the screen 301. For another example, the electronic device 101 may obtain the text information on the image 310 based on obtaining the image 310 (e.g., through capture of a screen including the image 310), and/or displaying the screen 301 including the image 310. The text information may include category information of the image 310, content information of the image 310, and summary information on the content information. The category information of the image 310 is information indicating a subject of the image 310, and may be, for example, a place. The content information of the image 310 is information on content included in the image 310, and may include at least one of, for example, a name, an opening time, a closing time, a time zone, a phone number, and an address of the place.

For example, the electronic device 101 may obtain the text information corresponding to the image 310 from the artificial intelligence model, to which the text extracted from the image objects 312, 314, 316, and 318 and a prompt are inputted. Additionally, in order for the electronic device 101 to obtain the text information, the image 310 together with the extracted text may be inputted to the artificial intelligence model.

Referring to FIG. 3B, the electronic device 101 may display a screen (or a window) 320 through the display 260. For example, the electronic device 101 may display the screen 320 together with the screen 305 including the image 310. For example, the electronic device 101 may display the screen 320 with a partial overlap of the screen 305 through the display 260, but is not limited thereto. For example, the electronic device 101 may display the screen 305 having a first size in a partial region of an entire display region of the display 260 and the screen 320 having a second size smaller than the first size in a remaining region. For example, the screen 320 may be displayed as a split or a pop-up of the screen 305. In an embodiment, the screen 305 may include the image 310 and may be a screen in which the visual objects 312, 314, and 316 corresponding to text included in the image 310 are highlighted. The electronic device 101 may display the screen 305 based on text extracted from the image 310.

Although not illustrated, before an output of the screen 320, an interface (e.g., the visual objects 215 and 219 of the screen 205 of FIG. 2B) for selecting the identified image objects 312, 314, 316, and 318 may be provided through the screen 305.

In an embodiment, the screen 320 may include a visual object 321 for representing the category information of the image 310. The visual object 321 may correspond to text such as 'Place information is in the screenshot', but is not limited thereto. For example, the screen 320 may include an icon related to a category of the image 310. In an embodiment, the electronic device 101 may display the screen 320 based on checking an application corresponding to the category of the image 310. As a non-limiting example, the application corresponding to the place, which is the category of the image 310, may include an application capable of performing a function related to the place, such as a map application.

Referring to FIG. 3C, in an embodiment, the electronic device 101 may display a screen (or a window) 330 through the display 260. For example, the electronic device 101 may display the screen 330 together with the screen 305. For example, the electronic device 101 may display the screen 330 through the display 260 in response to receiving an input (e.g., a touch input or a swipe-up gesture) to the visual object 321 of the screen 320. The screen 330 may have a size larger than the screen 320, and may be displayed on the screen 305 by partially overlapping, but is not limited thereto. For example, the screen 330 may be displayed as a split or a pop-up of the screen 305. For example, the electronic device 101 may display the screen 305 in a partial region of an entire display region of the display 260 and display the screen 330 smaller than the screen 305 and larger than the screen 320 in a remaining region. In an embodiment, it has been described that the screen 330 is displayed by an input to the visual object 321 of the screen 320, but is not limited thereto. For example, the screen 330 may be displayed after a predetermined time elapses after the screen 320 is displayed. As another example, the display of the screen 320 may be omitted, and the screen 330 may be displayed.

In an embodiment, the screen 330 may include the visual object 321 representing the category information of the image 310, a visual object 322 representing at least a portion of the summary information, and a visual object 323 for executing the application corresponding to the image 310. Although FIG. 3C illustrates that the visual object 323 is displayed, it is not limited thereto. For example, in a case that there are a plurality of applications corresponding to the image 310, such as visual objects 732 and 733 of FIG. 7 or visual objects 832 and 833 of FIG. 8, each of visual objects for executing the plurality of applications may be displayed. For example, the image 310 may include text information on a schedule and/or an appointment, in addition to text information on a specific place. In this case, the electronic device 101 may display not only the visual object 323, but also an application associated with the text information on a schedule and/or an appointment, for example, a visual object for executing a calendar application.

As a non-limiting example, the visual object 321 may be displayed in a first region of the screen 330, the visual object 322 may be displayed in a second region of the screen 330, and the visual object 323 may be displayed in a third region of the screen 330. As a non-limiting example, the second region may be located between the first region and the third region. As a non-limiting example, based on the illustration of FIG. 3C, the third region may be located below the first region and the second region. In an embodiment, the electronic device 101 may display the screen 330 based on checking an application corresponding to the category of the image 310.

It has been described that the screen 330 including the visual object 323 is displayed by a user input to the screen 320, but is not limited thereto. For example, the electronic device 101 may display, through the display 260, the visual object 323 or another screen including it instead of the screen 320 or the screen 330 based on obtaining the text information on the image 310 (e.g., displayed together with the screen 301 or the screen 305 including the image 310).

Referring to FIG. 3D, in an embodiment, the electronic device 101 may display a screen 340 different from the screen 330 through the display 260 in response to receiving an input related to the visual object 323. For example, the electronic device 101 may display the screen 340 by executing the application corresponding to the image 310. The screen 340 may include an execution screen of the application. For example, the screen 340 may include an execution screen capable of performing a function of the application corresponding to the category of the image 310. For example, the screen 340 may include an execution screen of the application capable of retrieving the place of the image 310. In an embodiment, an application (e.g., a map application) corresponding to the screen 340 may be different from an application (e.g., a wallet application) corresponding to the screen 240.

In an embodiment, the electronic device 101 may execute the application based at least in part on the text information corresponding to the image 310. For example, the electronic device 101 may display the screen 340 in a state in which the place of the image 310 is retrieved in response to an input to the visual object 323. The retrieval of the place may be performed through an external server for providing the application and/or a service using the application. The electronic device 101 may store the map information corresponding to the screen 340 in memory (e.g., the memory 130 of FIG. 1) of the electronic device 101 such that it may be provided without establishing a network with the external server. In FIG. 3D, the screen 340 indicating a path from a current location 341 to a location 342 corresponding to the place of the image 310 is illustrated, but is not limited by the illustrated example.

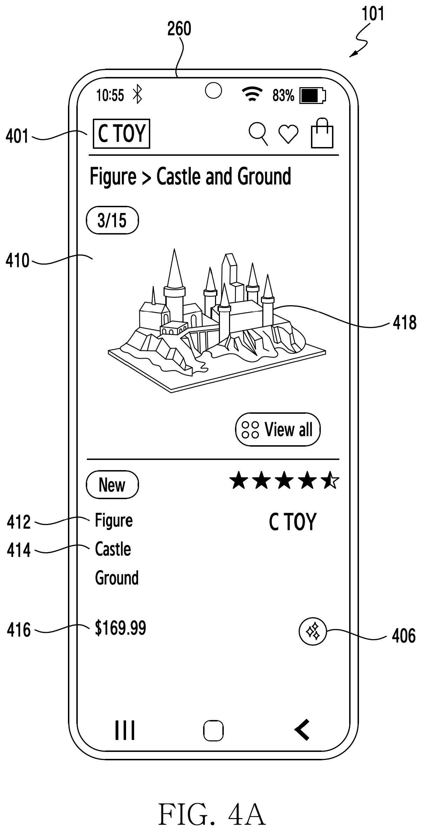

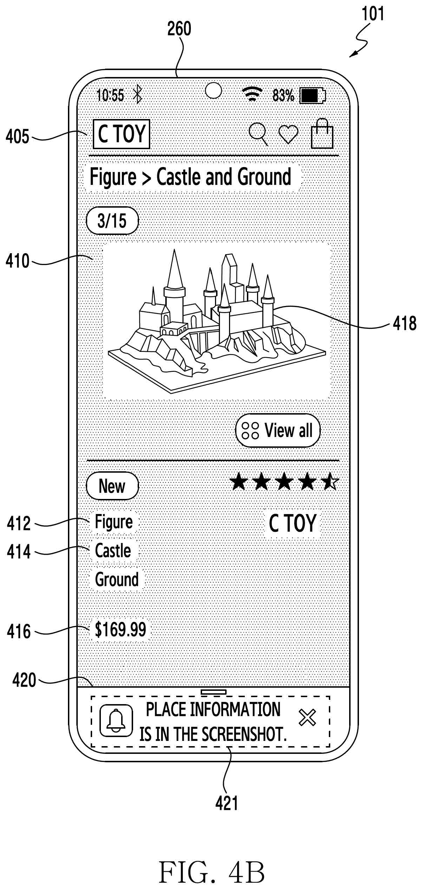

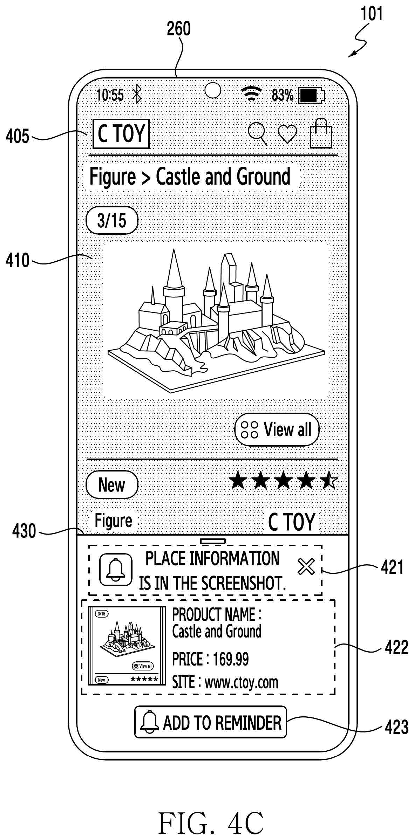

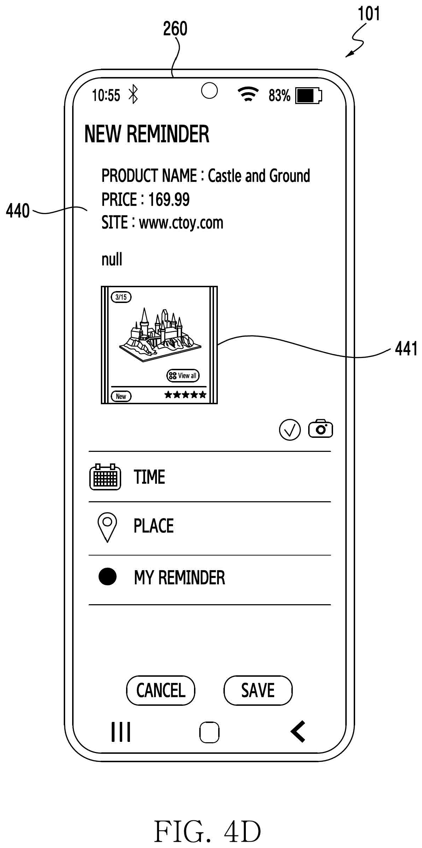

FIGS. 4A, 4B, 4C, and 4D illustrate examples of a screen displayed by an electronic device according to an embodiment. An electronic device 101 of FIGS. 4A, 4B, 4C, and 4D may be an example of the electronic device 101 of FIG. 1.

In FIGS. 4A, 4B, 4C, and 4D, examples of a method in which the electronic device 101 performs a function related to content in an image through analysis of the image are illustrated.

Referring to FIG. 4A, the electronic device 101 may display a screen 401 through a display 260. The screen 401 may include an image 410. The image 410 may include, for example, a still image and/or a screenshot image. As a non-limiting example, in a case that the image 410 is the screenshot image, the electronic device 101 may obtain the image 410 in response to receiving an input for capturing the screen 401 being displayed through the display 260. In an embodiment, the image 410 may be an image different from images 210 and 310. As described later, the image 410 may be an image classified into a different category from the images 210 and 310. The screen 401 being displayed through the display 260 may include an execution screen of various applications such as an SNS, a message, a wallet, a screen capture application, and an application for playing a picture or a video.

The image 410 may be distinguished from a preview image obtained through a camera (e.g., the camera module 180 of FIG. 1) of the electronic device 101. For example, the image 410 may be temporarily, permanently or semi-permanently stored in the volatile memory or the nonvolatile memory of the electronic device 101, and may be in a state that substantially the same object may be displayed again through the display 260 based on selection of a user or some functions of the electronic device 101.

In an embodiment, the image 410 may include an image representing a specific purchasable product. In FIG. 4A, it has been illustrated that the image 410 represents information on a purchasable toy castle, but is not limited by the illustrated example.

The image 410 may include image objects representing content in the image 410. For example, the image 410 may include image objects for describing the specific product. As a non-limiting example, the image 410 may include image objects 412, 414, 416, and 418. For example, the image objects 412, 414, and 416 may correspond to text. For example, the image object 418 may correspond to non-text. For example, the image objects 412 and 414 may represent an attribute of the specific product, such as a 'figure' and a 'castle'. For example, the image object 416 may represent a price of the specific product. For example, the image object 418 may represent a shape of the specific product. Although not illustrated, the image 410 may include an image object indicating a path through which the specific product may be purchased, such as an address of a web page.

In an embodiment, the screen 401 may include a visual object 406 (e.g., a visual object 306) for performing recognition of the image 410 and/or displaying a recognition result for the image 410. For example, the electronic device 101 may obtain text corresponding to the image 410 based on receiving a user input to the visual object 406. For example, the electronic device 101 may identify the image objects 412, 414, 416, and 418 included in image 410 and extract text corresponding to the image objects 412, 414, 416, and 418 by performing OCR on the image 410. However, a method for extracting the text is not limited to the above-described OCR, and various techniques may be used.

In an embodiment, it has been described that the electronic device 101 obtains text corresponding to the image 410 based on a user input to the visual object 406, but is not limited thereto. For example, the electronic device 101 may extract text included in the image 410 based on obtaining the image 410 (e.g., capturing a screen including the image 410) and/or displaying the screen 401 including the image 410. In this case, the electronic device 101 may display a screen 405 for representing the texts extracted from the image 410 in response to a user input to the visual object 406.

Additionally or optionally, the visual object 406 may be selectively displayed according to an image being displayed in the electronic device 101. For example, the electronic device 101 may identify whether an image representing a specific product such as the image 410 is being displayed through the screen 401. The electronic device 101 may identify that the image 410 is being displayed through the screen 401, and may display the visual object 406. The electronic device 101 may identify that another image different from the image representing the specific product is being displayed through the screen 401, and may not display the visual object 406.

In an embodiment, the electronic device 101 may obtain text information corresponding to the image 410. For example, the electronic device 101 may obtain the text information corresponding to the image 410 based on an input to the visual object 406 of the screen 401. For another example, the electronic device 101 may obtain the text information on the image 410 based on obtaining the image 410 (e.g., through capture of a screen including the image 410), and/or displaying the screen 401 including the image 410. The text information may include category information of the image 410, content information of the image 410, and summary information on the content information. The category information of the image 410 is information indicating a subject of the image 410, and may be, for example, a shopping. The content information of the image 410 is information on content included in the image 410, and may include at least one of, for example, a brand name, a product name, a cost, a provision price, sales promotion content, and a purchase destination of the specific product.

For example, the electronic device 101 may obtain the text information corresponding to the image 410 from the artificial intelligence model, to which the text extracted from the image objects 412, 414, 416, and 418 and a prompt are inputted. Additionally, in order for the electronic device 101 to obtain the text information, the image 410 together with the extracted text may be inputted to the artificial intelligence model.

Referring to FIG. 4B, the electronic device 101 may display a screen (or a window) 420 through the display 260. For example, the electronic device 101 may display the screen 420 together with the screen 405. For example, the electronic device 101 may display the screen 420 with a partial overlap of the screen 405 through the display 260, but is not limited thereto. For example, the electronic device 101 may display the screen 405 having a first size in a partial region of an entire display region of the display 260 and the screen 420 having a second size smaller than the first size in a remaining region. For example, the screen 420 may be displayed as a split or a pop-up of the screen 405. In an embodiment, the screen 405 may include the image 410 and may be a screen in which the visual objects 412, 414, 416, and 418 identified in the image 410 are highlighted. The electronic device 101 may display the screen 405 based on text extracted from the image 410.

Although not illustrated, before an output of the screen 420, an interface (e.g., the visual objects 215 and 219 of the screen 205 of FIG. 2B) for selecting the identified image objects 412, 414, 416, and 418 may be provided.

In an embodiment, the screen 420 may include a visual object 421 for representing the category information of the image 410. The visual object 421 may correspond to text such as 'Shopping information is in the screenshot', but is not limited thereto. For example, the screen 420 may include an icon related to a category of the image 410. In an embodiment, the electronic device 101 may display the screen 420 based on checking an application corresponding to the category of the image 410. As a non-limiting example, the application corresponding to the shopping, which is the category of the image 410, may include an application for providing a reminder for the shopping, such as a reminder application.

Referring to FIG. 4C, in an embodiment, the electronic device 101 may display a screen (or a window) 430 through the display 260. For example, the electronic device 101 may display the screen 430 together with the screen 405. For example, the electronic device 101 may display the screen 430 through the display 260 in response to receiving an input (e.g., a touch input or a swipe-up gesture) to the visual object 421 of the screen 420. The screen 430 may have a size larger than the screen 420, and may be displayed on the screen 405 by partially overlapping, but is not limited thereto. For example, the screen 430 may be displayed as a split or a pop-up of the screen 405. For example, the electronic device 101 may display the screen 405 in a partial region of an entire display region of the display 260 and display the screen 430 smaller than the screen 405 and larger than the screen 420 in a remaining region. In an embodiment, it has been described that the screen 430 is displayed by an input to the visual object 421 of the screen 420, but is not limited thereto. For example, the screen 430 may be displayed after a predetermined time elapses after the screen 420 is displayed. As another example, the display of the screen 420 may be omitted, and the screen 430 may be displayed.

In an embodiment, the screen 430 may include the visual object 421 representing the category information of the image 410, a visual object 422 representing at least a portion of the summary information, and a visual object 423 for executing the application corresponding to the image 410. Although FIG. 4C illustrates that the visual object 423 is displayed, it is not limited thereto. For example, in a case that there are a plurality of applications corresponding to the image 410, such as visual objects 732 and 733 of FIG. 7 or visual objects 832 and 833 of FIG. 8, each of visual objects for executing the plurality of applications may be displayed.

As a non-limiting example, the visual object 421 may be displayed in a first region of the screen 430, the visual object 422 may be displayed in a second region of the screen 430, and the visual object 423 may be displayed in a third region of the screen 430. As a non-limiting example, the second region may be located between the first region and the third region. As a non-limiting example, based on the illustration of FIG. 4C, the third region may be located below the first region and the second region. In an embodiment, the electronic device 101 may display the screen 430 based on checking an application corresponding to the category of the image 410.

It has been described that the screen 430 including the visual object 423 is displayed by a user input to the screen 420, but is not limited thereto. For example, the electronic device 101 may display, through the display 260, the visual object 423 or another screen including it instead of the screen 420 or the screen 430 based on obtaining the text information on the image 410 (e.g., displayed together with the screen 401 or the screen 405 including the image 410).

Referring to FIG. 4D, in an embodiment, the electronic device 101 may display a screen 440 different from the screen 430 through the display 260 in response to receiving an input related to the visual object 423. For example, the electronic device 101 may display the screen 440 by executing the application corresponding to the image 410. The screen 440 may include an execution screen of the application. For example, the screen 440 may include an execution screen capable of performing a function of the application corresponding to the category of the image 410. For example, the screen 440 may include an execution screen of the application capable of storing shopping information corresponding to the image 410. In an embodiment, an application (e.g., a reminder application) corresponding to the screen 440 may be different from an application (e.g., a wallet application) corresponding to a screen 240 and an application (e.g., a map application) corresponding to a screen 340.

In an embodiment, the electronic device 101 may execute the application based at least in part on the text information corresponding to the image 410. For example, in response to an input to the visual object 423, the electronic device 101 may display the screen 440 in a state in which at least a portion of the text information corresponding to the image 410 is inputted into an input field of an execution screen of the application. For example, text information corresponding to objects selected from among the image objects 412, 414, 416, and 418 may be inputted to the input field of the execution screen of the application, but is not limited thereto.

Additionally, the electronic device 101 may display the screen 440 in a state to which an image based at least in part on the image 410 is attached, such as an image 441, in response to an input to the visual object 423. Additionally, before the screen 440 is displayed, a screen for the user to designate at least a partial region of the image 410 may be provided, such as a screen 1407 of FIG. 14D. In this case, the screen 440 to which the image 441 corresponding to a designated region of the image 410 is attached may be displayed.

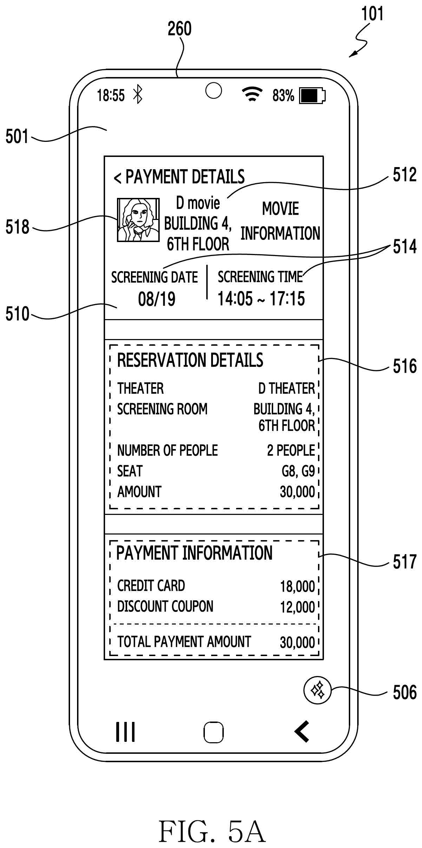

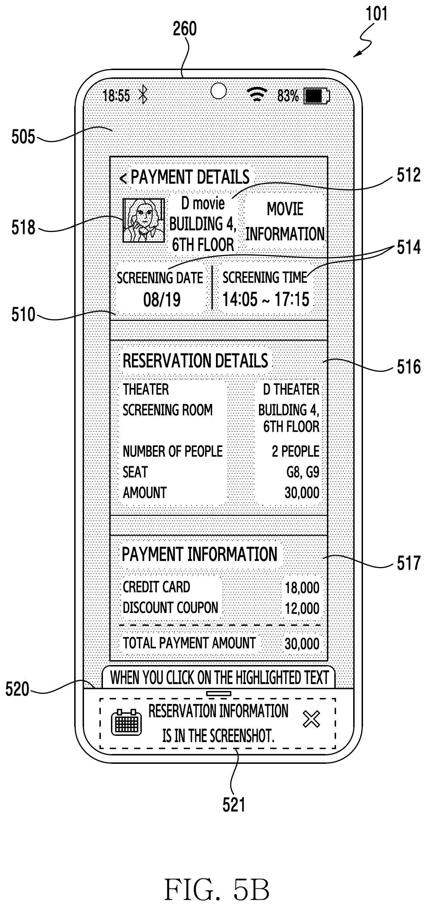

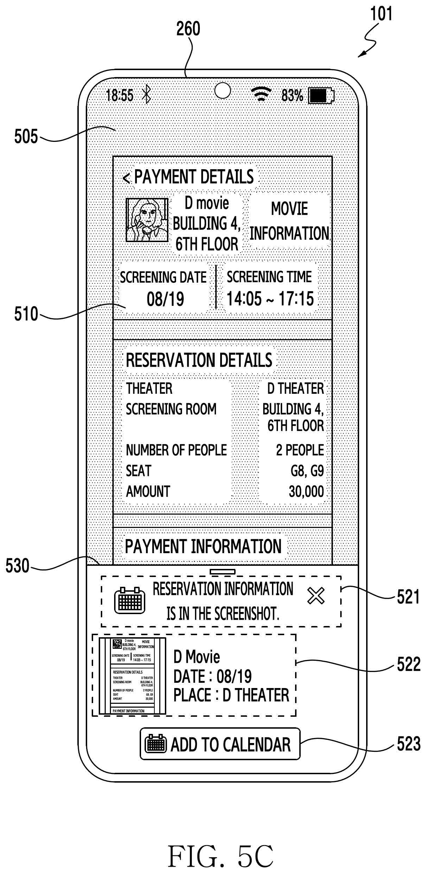

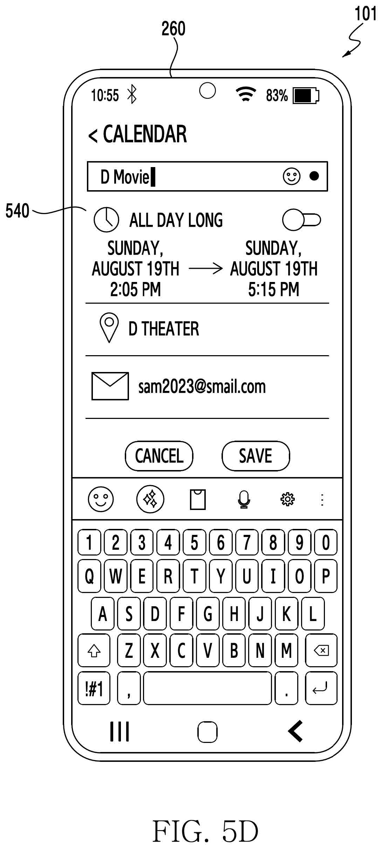

FIGS. 5A, 5B, 5C, and 5D illustrate examples of a screen displayed by an electronic device according to an embodiment. An electronic device 101 of FIGS. 5A, 5B, 5C, and 5D may be an example of the electronic device 101 of FIG. 1.

In FIGS. 5A, 5B, 5C, and 5D, examples of a method in which the electronic device 101 performs a function related to content in an image through analysis of the image are illustrated.

Referring to FIG. 5A, the electronic device 101 may display a screen 501 through a display 260. The screen 501 may include an image 510. The image 510 may include, for example, a still image and/or a screenshot image. As a non-limiting example, in a case that the image 510 is the screenshot image, the electronic device 101 may obtain the image 510 in response to receiving an input for capturing the screen 501 being displayed through the display 260. In an embodiment, the image 510 may be an image different from images 210, 310, and 410. As described later, the image 510 may be an image classified into a different category from the images 210, 310, and 410. The screen 501 being displayed through the display 260 may include an execution screen of various applications such as an SNS, a message, a wallet, a screen capture application, and an application for playing a picture or a video.

The image 510 may be distinguished from a preview image obtained through a camera (e.g., the camera module 180 of FIG. 1) of the electronic device 101. For example, the image 510 may be temporarily, permanently or semi-permanently stored in the volatile memory or the nonvolatile memory of the electronic device 101, and may be in a state that substantially the same object may be displayed again through the display 260 based on selection of a user or some functions of the electronic device 101.

In an embodiment, the image 510 may include a ticket image. In FIG. 5A, the image 510 is illustrated as a movie ticket image, but is not limited by the illustrated example. For example, the image 510 may include an image representing a reserved schedule, such as a flight ticket.

The image 510 may include image objects representing content in the image 510. For example, the image 510 may include image objects representing information on a ticket. As a non-limiting example, the image 510 may include image objects 512, 514, 516, 517, and 518. For example, the image objects 512, 514, 516, and 517 may correspond to text. For example, the image object 518 may correspond to non-text. For example, the image object 512 may represent a movie title. For example, the image object 514 may represent a movie screening date and screening time. For example, the image object 516 may represent reservation details such as a theater, a screening room, the number of people, a seat, and an amount. For example, the image object 517 may represent payment information. For example, the image object 518 may represent a poster of a movie.

In an embodiment, the screen 501 may include a visual object 506 (e.g., a visual object 406) for performing recognition of the image 510 and/or displaying a recognition result for the image 510. For example, the electronic device 101 may obtain text corresponding to the image 510 based on receiving a user input to the visual object 506. For example, the electronic device 101 may identify the image objects 512, 514, 516, 517, and 518 included in the image 510 and extract text corresponding to the image objects 512, 514, 516, 517, and 518 by performing OCR on the image 510. However, a method for extracting the text is not limited to the above-described OCR, and various techniques may be used.

In an embodiment, it has been described that the electronic device 101 obtains text corresponding to the image 510 based on a user input to the visual object 506, but is not limited thereto. For example, the electronic device 101 may extract text included in a screen being displayed through the display 260 before receiving a user input to the visual object 506. For example, before receiving a user input to the visual object 506, the electronic device 101 may extract texts included in the image 510. For example, the electronic device 101 may obtain text corresponding to the image objects 512, 514, 516, 517, and 518 included in the image 510 based on obtaining the image 510 (e.g., capturing a screen including the image 510) and/or displaying the screen 501 including the image 510. In this case, the electronic device 101 may display a screen 505 for representing the texts extracted from the image 510 in response to a user input to the visual object 506.

Additionally or optionally, the visual object 506 may be selectively displayed according to an image being displayed in the electronic device 101. For example, the electronic device 101 may identify whether a ticket image such as the image 510 is being displayed through the screen 501. The electronic device 101 may identify that a ticket image such as the image 510 is being displayed through the screen 501, and may display the visual object 506. The electronic device 101 may identify that another image different from the ticket image is being displayed through the screen 501, and may not display the visual object 506.

In an embodiment, the electronic device 101 may obtain text information corresponding to the image 510. For example, the electronic device 101 may obtain the text information corresponding to the image 510 based on an input to the visual object 506 of the screen 501. For another example, the electronic device 101 may obtain the text information on the image 510 based on obtaining the image 510 (e.g., through capture of a screen including the image 510), and/or displaying the screen 501 including the image 510. The text information may include category information of the image 510, content information of the image 510, and summary information on the content information. The category information of the image 510 is information indicating a subject of the image 510, and may be, for example, a schedule. The content information of the image 510 is information on content included in the image 510, and may include at least one of, for example, a title, a start date, a start time, a start time zone, an end date, an end time, an end time zone, a start place, an end place, and a reservation location.

For example, the electronic device 101 may obtain the text information corresponding to the image 510 from the artificial intelligence model, to which the text extracted from the image objects 512, 514, 516, 517, and 518 and a prompt are inputted. Additionally, in order for the electronic device 101 to obtain the text information, the image 510 together with the extracted text may be inputted to the artificial intelligence model.

Referring to FIG. 5B, the electronic device 101 may display a screen (or a window) 520 through the display 260. For example, the electronic device 101 may display the screen 520 together with the screen 505. For example, the electronic device 101 may display the screen 520 with a partial overlap of the screen 505 through the display 260, but is not limited thereto. For example, the electronic device 101 may display the screen 505 having a first size in a partial region of an entire display region of the display 260 and the screen 520 having a second size smaller than the first size in a remaining region. For example, the screen 520 may be displayed as a split or a pop-up of the screen 505. In an embodiment, the screen 505 may include the image 510 and may be a screen in which the visual objects 512, 514, 516, and 517 identified in the image 510 are highlighted. The electronic device 101 may display the screen 505 based on text extracted from the image 510.

Although not illustrated, before an output of the screen 520, an interface (e.g., the visual objects 215 and 219 of the screen 205 of FIG. 2B) for selecting the identified image objects 512, 514, 516, 517, and 518 may be provided.

In an embodiment, the screen 520 may include a visual object 521 for representing the category information of the image 510. The visual object 521 may correspond to text such as 'Reservation information is in the screenshot', but is not limited thereto. For example, the screen 520 may include an icon related to a category of the image 510. In an embodiment, the electronic device 101 may display the screen 520 based on checking an application corresponding to the category of the image 510. As a non-limiting example, the application corresponding to the schedule, which is the category of the image 510, may include an application for storing and managing the schedule, such as a calendar application.

Referring to FIG. 5C, in an embodiment, the electronic device 101 may display a screen (or a window) 530 through the display 260. For example, the electronic device 101 may display the screen 530 together with the screen 505. For example, the electronic device 101 may display the screen 530 through the display 260 in response to receiving an input (e.g., a touch input or a swipe-up gesture) to the visual object 521 of the screen 520. The screen 530 may have a size larger than the screen 520, and may be displayed on the screen 505 by partially overlapping, but is not limited thereto. For example, the screen 530 may be displayed as a split or a pop-up of the screen 505. For example, the electronic device 101 may display the screen 505 in a partial region of an entire display region of the display 260 and display the screen 530 smaller than the screen 505 and larger than the screen 520 in a remaining region. In an embodiment, it has been described that the screen 530 is displayed by an input to the visual object 521 of the screen 520, but is not limited thereto. For example, the screen 530 may be displayed after a predetermined time elapses after the screen 520 is displayed. As another example, the display of the screen 520 may be omitted, and the screen 530 may be displayed.

In an embodiment, the screen 530 may include the visual object 521 representing the category information of the image 510, a visual object 522 representing at least a portion of the summary information, and a visual object 523 for executing the application corresponding to the image 510. Although FIG. 5C illustrates that the visual object 523 is displayed, it is not limited thereto. For example, in a case that there are a plurality of applications corresponding to the image 510, such as visual objects 732 and 733 of FIG. 7 or visual objects 832 and 833 of FIG. 8, each of visual objects for executing the plurality of applications may be displayed.

As a non-limiting example, the visual object 521 may be displayed in a first region of the screen 530, the visual object 522 may be displayed in a second region of the screen 530, and the visual object 523 may be displayed in a third region of the screen 530. As a non-limiting example, the second region may be located between the first region and the third region. As a non-limiting example, based on the illustration of FIG. 5C, the third region may be located below the first region and the second region. In an embodiment, the electronic device 101 may display the screen 530 based on checking an application corresponding to the category of the image 510.

It has been described that the screen 530 including the visual object 523 is displayed by a user input to the screen 520, but is not limited thereto. For example, the electronic device 101 may display, through the display 260, the visual object 523 or another screen including it instead of the screen 520 or the screen 530 based on obtaining the text information on the image 510 (e.g., displayed together with the screen 501 or the screen 505 including the image 510).

Referring to FIG. 5D, in an embodiment, the electronic device 101 may display a screen 540 different from the screen 530 through the display 260 in response to receiving an input related to the visual object 523. For example, the electronic device 101 may display the screen 540 by executing the application corresponding to the image 510. The screen 540 may include an execution screen of the application. For example, the screen 540 may include an execution screen capable of performing a function of the application corresponding to the category of the image 510. For example, the screen 540 may include an execution screen of the application capable of storing schedule information corresponding to the image 510. In an embodiment, an application (e.g., a calendar application) corresponding to the screen 540 may be different from an application (e.g., a wallet application) corresponding to a screen 240, an application (e.g., a map application) corresponding to a screen 340, and an application (e.g., a reminder application) corresponding to a screen 440.

In an embodiment, the electronic device 101 may execute the application based at least in part on the text information corresponding to the image 510. For example, in response to an input to the visual object 523, the electronic device 101 may display the screen 540 in a state in which at least a portion of the text information corresponding to the image 510 is inputted into an input field of an execution screen of the application. For example, text information corresponding to objects selected from among the image objects (e.g., the image objects 512, 514, 516, and 517) identified in the image 510 may be inputted to the input field of the execution screen of the application, but is not limited thereto.

In an embodiment, it has been described that the electronic device 101 obtains the text information using the artificial intelligence model, to which the text extracted from an image (e.g., the images 210, 310, 410, or 510) and the prompt are inputted, but is not limited thereto. For example, before obtaining the text information, the electronic device 101 may obtain category information of the image. For example, the electronic device 101 may obtain the category information from an artificial intelligence model, to which a text extracted from the image and a first prompt for generating category information from the extracted text are inputted. Thereafter, the electronic device 101 may obtain the text information from the artificial intelligence model, to which a second prompt for generating the content information corresponding to the category information from the extracted text is inputted. For another example, in order to obtain the text information, a machine learning-based model may be used instead of a prompt-based generative model.

In an embodiment, the electronic device 101 may include the artificial intelligence model. For example, the artificial intelligence model may be stored in the memory (e.g., the memory 130 of FIG. 1) of the electronic device 101. In an embodiment, the artificial intelligence model may be included in a server (e.g., the server 108 of FIG. 1) outside the electronic device 101. For example, the artificial intelligence model may be stored in memory of the server. In this case, the electronic device 101 may transmit text extracted from the image to the server through a communication circuit (e.g., the communication module 190 of FIG. 1). Thereafter, the electronic device 101 may receive the text information from the server through the communication circuit. In addition, in order to obtain the text information, the electronic device 101 may transmit the image to the server together with the text extracted from the image. In an embodiment, the electronic device 101 may obtain additional information on the image by using the image and/or the text information on the image. For example, the electronic device 101 may obtain the additional information by retrieving the image and at least a portion of the text information on the image through a network such as the Internet. For example, the additional information may include information that is not included in the text information on the image. For example, the image is a coffee coupon (e.g., the image 210 of FIG. 2A) and may not include information on a specific point where the coffee coupon may be used. In this case, the electronic device 101 may obtain information on the specific point as the additional information through retrieval using the image and/or the text information based on the image.

In an embodiment, the electronic device 101 may identify a category of the image using the text information. For example, the electronic device 101 may identify a category of the image by using category information of the image 510, included in the text information.

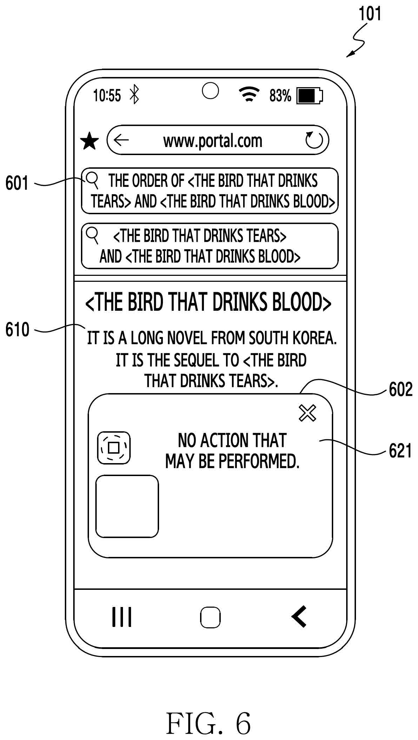

FIG. 6 illustrates examples of a screen displayed by an electronic device according to an embodiment. An electronic device 101 of FIG. 6 may be an example of the electronic device 101 of FIG. 1.

Referring to FIG. 6, the electronic device 101 may display a screen 601 through a display 260. The screen 601 may include an image 610. The image 610 may include, for example, a still image and/or a screenshot image. As a non-limiting example, in a case that the image 610 is the screenshot image, the electronic device 101 may obtain the image 610 in response to receiving an input for capturing the screen 601 being displayed through the display 260.

In an embodiment, the electronic device 101 may extract text corresponding to an image object included in the image 610. The electronic device 101 may obtain text information corresponding to the image 610 by using the extracted text.

The electronic device 101 may identify a category of the image 610 using the text information. For example, the image 610 may have a different category from the above-described images 210, 310, 410, and 510. For example, the category of the image 610 may include movie information, food information, music information, technical information, news, small talk, meeting logs, documents, personal information, rune information, SNS, or other categories. In this case, the electronic device 101 may determine that there is no application corresponding to the category of the image 610 detected using the text information. Based on determining that there is no application corresponding to the category of the image 610, the electronic device 101 may display, through the display 260, a screen 602 on the screen 601 by partially overlapping.

In an embodiment, the screen 602 may include a visual object 621 indicating that there is no action that may be performed in association with the image 610. As a non-limiting example, the visual object 621 may include text such as 'No action that may be performed'.

Although not illustrated, a category of an image detected using the text information and an application corresponding to the category may be changed according to setting of a user.

For example, even when the category of the image 610 is identified as the food information, the category of the image 610 may be changed to a different category (e.g., shopping) from the food information by setting of the user. Thereafter, the electronic device 101 may determine a category corresponding to the image 610 as the different category by using the text information.

For example, a specific application corresponding to the category of the image 610 may be designated by setting of the user. After the specific application is designated, the electronic device 101 may display a visual object for executing the specific application by using the text information of the image 610.

In an embodiment, it has been described that the text information is generated based on an image and text extracted from the image, but is not limited thereto. For example, the electronic device 101 may perform retrieval on the Internet by using at least a portion of the text extracted from the image. In this case, the electronic device 101 may generate the text information including another information not included in the image based on the retrieval on the Internet.

FIG. 7 is a diagram representing an example of a screen displayed by an electronic device according to an embodiment. A screen 730 illustrated in FIG. 7 may be a screen displayed through the display 260 of the electronic device 101 of FIGS. 2A to 6.

In an embodiment, it has been described that an application corresponding to a category of an image (e.g., images 210, 310, 410, and 510) is designated as 1:1, but is not limited thereto. For example, a plurality of applications may be designated corresponding to one category.

For example, although not illustrated, the image may include image objects representing purchasable book information. In this case, the category of the image detected using text information of the image may be book information. In this case, the electronic device 101 may display a screen 730, including a visual object 731 representing the category of the image, a visual object 732 for executing a web browser application for purchasing a book represented in the image, and a visual object 733 for executing a reading application.

FIG. 8 is a diagram representing an example of a screen displayed by an electronic device according to an embodiment. A screen 830 illustrated in FIG. 8 may be a screen displayed through the display 260 of the electronic device 101 of FIGS. 2A to 6.

In an embodiment, it has been described that a category corresponding to an image (e.g., images 210, 310, 410, and 510) is designated as 1:1, but is not limited thereto. For example, a plurality of categories may be designated to one image.

For example, although not illustrated, the image may include an image for a coupon image such as the image 210 and a specific purchasable product such as the image 310. In this case, the category of the image detected using text information of the image may be the coupon and the shopping. In this case, an electronic device 101 may display the screen 830 including a visual object 832 for executing a wallet application corresponding to the coupon category and a visual object 833 for executing a reminder application corresponding to the shopping category.

In an embodiment, the electronic device 101 may display another visual object (not illustrated) for storing text information of the image in a plurality of applications. For example, the electronic device 101 may, in response to an input on the other visual object, store the image and/or the text information corresponding to the image in the wallet application and the reminder application, or display a screen for storing them.

FIG. 9 illustrates an example of a signal flow for a method of providing a function associated with text information generated based on an image, according to an embodiment.

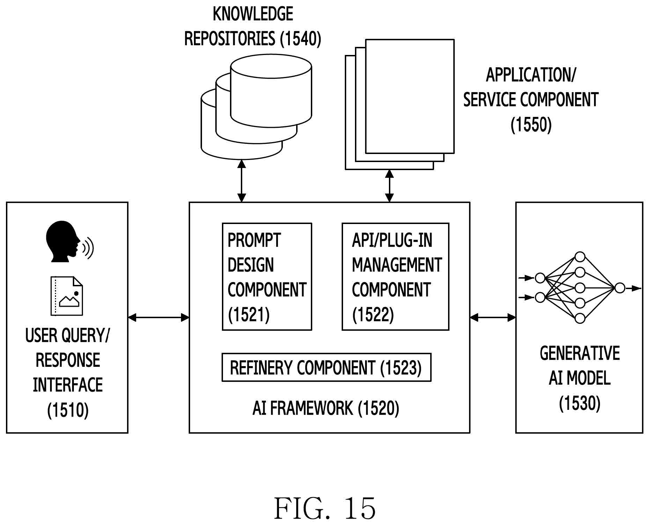

A first application 901, an image analysis model 902, a text information extraction model 903, and a second application 904 illustrated in FIG. 9 may be stored in the memory (e.g., the memory 130 of FIG. 1) of the electronic device 101 of FIG. 1. By being executed by a processor 120 of the electronic device 101, operations of the first application 901, the image analysis model 902, the text information extraction model 903, and the second application 904 may be performed. In an embodiment, the electronic device 101 or the text information extraction model 903 may include at least one of blocks of an artificial intelligence system of FIG. 15. Alternatively or optionally, the image analysis model 902 may be included in a server (e.g., the server 108 of FIG. 1) outside the electronic device 101 and executed by the server. Alternatively or optionally, the text information extraction model 903 may be included in a server (e.g., the server 108 of FIG. 1) outside the electronic device 101 and executed by the server.

Referring to FIG. 9, in an embodiment, the first application 901 may include a capture application capable of capturing a screen being displayed through a display 260 of the electronic device 101.

In an embodiment, the image analysis model 902 may be configured to obtain text from an image object included in an image. For example, the image analysis model 902 may extract the text by performing OCR on an inputted image.

In an embodiment, the text information extraction model 903 may be trained to generate text information based on text. The text information extraction model 903 may be trained to generate the text information based on an image and text.

In an embodiment, the second application 904 may include at least one application corresponding to a category of the image detected using the text information.

In operation 905, the electronic device 101 may obtain a screenshot image using the first application 901. For example, the electronic device 101 may obtain an image 210 using the first application 901. For example, the electronic device 101 may obtain an image 310 using the first application 901. For example, the electronic device 101 may obtain an image 410 using the first application 901. For example, the electronic device 101 may obtain an image 510 using the first application 901.

In operation 910, the electronic device 101 may transmit the screenshot image from the first application 901 to the image analysis model 902. For example, the electronic device 101 may perform the operation 910 based on a user input related to the screenshot image. For example, the electronic device 101 may obtain the screenshot image using the first application 901 and transmit the obtained screenshot image from the first application 901 to the image analysis model 902 based on receiving a user input to capture a screen being displayed through the display 260. For example, the electronic device 101 may transmit the image 210 from the first application 901 to the image analysis model 902 based on an input to a visual object 206 of a screen 201.

For example, the electronic device 101 may transmit the image 310 from the first application 901 to the image analysis model 902 based on an input to a visual object 306 of a screen 301. For example, the electronic device 101 may transmit the image 410 from the first application 901 to the image analysis model 902 based on an input to a visual object 406 of a screen 401. For example, the electronic device 101 may transmit the image 510 from the first application 901 to the image analysis model 902 based on an input to a visual object 506 of a screen 501.

In operation 915, the electronic device 101 may extract text of the screenshot image using the image analysis model 902. For example, the electronic device 101 may extract text corresponding to image objects 211, 212, and 216 in the image 210. For example, the electronic device 101 may extract text corresponding to image objects 312, 314, and 316 in the image 310. For example, the electronic device 101 may extract text corresponding to image objects 412, 414, and 416 in the image 410. For example, the electronic device 101 may extract text corresponding to image objects 512, 514, 516, and 517 in the image 510. In operation 920, the electronic device 101 may transmit the extracted text from the image analysis model 902 to the first application 901. For example, the electronic device 101 may transmit the text extracted from the image objects 211, 212, and 216 in the image 210 from the image analysis model 902 to the first application 901. For example, the electronic device 101 may transmit the text extracted from the image objects 312, 314, and 316 in the image 310 from the image analysis model 902 to the first application 901. For example, the electronic device 101 may transmit the text extracted from the image objects 412, 414, and 416 in the image 410 from the image analysis model 902 to the first application 901. For example, the electronic device 101 may transmit the text extracted from the image objects 512, 514, 516, and 517 in the image 510 from the image analysis model 902 to the first application 901.

In operation 930, the electronic device 101 may transmit the extracted text from the first application 901 to the text information extraction model 903. Additionally, the electronic device 101 may transmit the screenshot image of the operation 910 and/or a prompt, together with the extracted text from the first application 901 to the text information extraction model 903. For example, the electronic device 101 may transmit a prompt in which the extracted text is embedded from the first application 901 to the text information extraction model 903.

In operation 935, the electronic device 101 may generate text information using the text information extraction model 903. The text information may include the category information, the content information, and the summary information.

For example, the text information on the image 210 may indicate that the image 210 falls into a 'Coupon' category and may include information on at least one of a brand of a coupon provider, a coupon code (e.g., an identification number of a coupon or a barcode number), content provided by the coupon, a start date and time, an expiration date and time, a usage method, and a restriction.

For example, the text information on the image 310 may indicate that the image 310 falls into a 'Place' category and may include information on at least one of a name, an opening time, a closing time, a time zone, a phone number, and an address of a place.

For example, the text information on the image 410 may indicate that the image 410 falls into a 'Shopping' category and may include information on at least one of a brand name, a product name, a cost, a provision price, sales promotion content, and a purchase destination of a specific product.

For example, the text information on the image 410 may indicate that the image 410 falls into a 'Schedule' category and may include information on at least one of a title, a start date, a start time, a start time zone, an end date, an end time, an end time zone, a start place, an end place, and a reservation location.

In an embodiment, it has been described that the electronic device 101 obtains all of the text information from the text information extraction model 903 to which the prompt that the extracted text is embedded is inputted, but is not limited thereto. For example, the electronic device 101 may transmit a first prompt for generating category information from the extracted text from the first application 901 to the text information extraction model 903. Thereafter, the electronic device 101 may transmit the category information from the text information extraction model 903 to which the first prompt is inputted to the first application 901. The electronic device 101 may transmit a second prompt for generating content information corresponding to the category information from the extracted text from the first application 901 to the text information extraction model 903.

In operation 940, the electronic device 101 may transmit the generated text information from the text information extraction model 903 to the first application 901.

In operation 950, the electronic device 101 may transmit the generated text information from the first application 901 to the text information extraction model 903. For example, the electronic device 101 may display a visual object (e.g., visual objects 223, 323, 423, and 523) for executing at least one application corresponding to the category of the image identified using the generated text information using the first application 901. The electronic device 101 may perform the operation 950 based on an input to the visual object (e.g., the visual objects 223, 323, 423, and 523) for executing the at least one application.

In operation 960, the electronic device 101 may execute the second application 904 based on the text information. For example, the second application 904 corresponding to the image 210 may include a wallet application. The electronic device 101 may execute the wallet application based on the generated text information on the image 210. For example, the electronic device 101 may display an execution screen 240 of a coupon application for storing a coupon corresponding to the image 210. At least a portion of the text information generated for the image 210 may be inputted into an input field of the execution screen 240 of the coupon application.

For example, the second application 904 corresponding to the image 310 may include a map application. The electronic device 101 may execute the map application based on the generated text information on the image 310. For example, the electronic device 101 may display an execution screen 340 of a map application for providing information on a place corresponding to the image 310. On the execution screen 340 of the map application, a path to a place corresponding to the image 310 may be displayed.

For example, the second application 904 corresponding to the image 410 may include a reminder application. The electronic device 101 may execute the reminder application based on the generated text information on the image 410. For example, the electronic device 101 may display an execution screen 440 of a reminder application for registering shopping information corresponding to the image 410 as a reminder. At least a portion of the text information generated for the image 410 may be inputted into an input field of the execution screen 440 of the reminder application.

For example, the second application 904 corresponding to the image 510 may include a schedule application. The electronic device 101 may execute the schedule application based on the generated text information on the image 510. For example, the electronic device 101 may display an execution screen 540 of a schedule application for registering a schedule corresponding to the image 510. At least a portion of the text information generated for the image 510 may be inputted into an input field of the execution screen 540 of the schedule application.

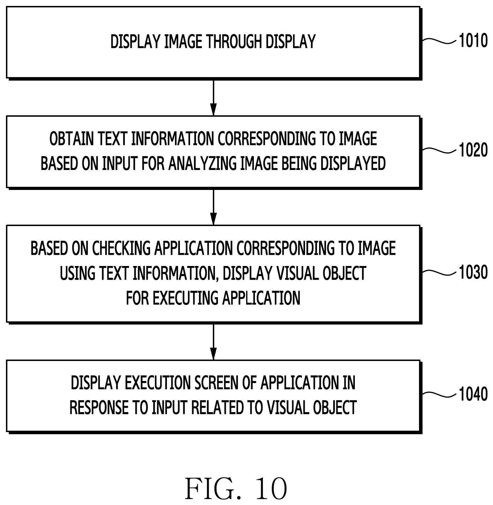

FIG. 10 is a flowchart representing a method of providing a function associated with text information generated based on an image, according to an embodiment. Operations illustrated in FIG. 10 may be performed by the electronic device 101 of FIG. 1. For example, a processor 120 of the electronic device 101 may perform the operations of FIG. 10. Instructions stored in memory (e.g., the memory 130 of FIG. 1) may cause the electronic device 101 to perform the operations of FIG. 10 when executed by the processor 120.

Referring to FIG. 10, in operation 1010, the electronic device 101 may display an image (e.g., images 210, 310, 410, and 510) through a display.

In operation 1020, the electronic device 101 may obtain text information corresponding to the image based on an input for analyzing the image being displayed (e.g., an input to objects 206, 306, 406, and 506). The text information may include category information, content information, and summary information on the content information of the image.

In operation 1030, based on checking an application corresponding to the image using the text information, the electronic device 101 may display a visual object (e.g., visual objects 233, 333, 433, and 533) for executing the application. For example, the electronic device 101 may display a window (e.g., a screen 230, 330, 430, or 530) including the visual object. For example, the electronic device 101 may display the visual object or the window including it together with the image. For example, the electronic device 101 may display the visual object or the window including it on the image by partially overlapping, but is not limited thereto.

In operation 1040, the electronic device 101 may display an execution screen (e.g., a screen 240, 340, 440, or 540) of the application in response to an input related to the visual object.

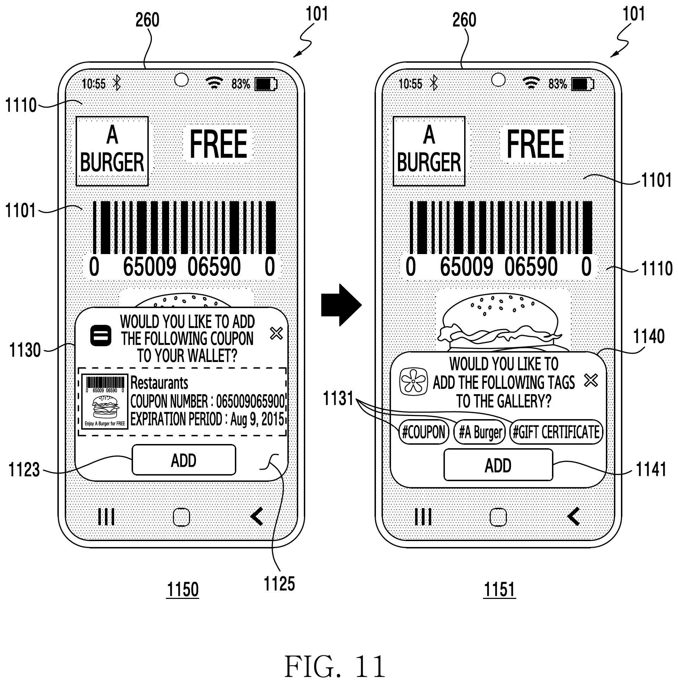

FIG. 11 illustrates examples of an exemplary screen of an electronic device according to an embodiment. An electronic device 101 of FIG. 11 may be an example of the electronic device 101 of FIG. 1. For example, a display 260 may include the display module 160 of FIG. 1.

Referring to an example 1150, the electronic device 101 may display a screen 1101 including an image 1110 through the display 260. Description of an image 210 and a screen 201 may be substantially identically applied to the description of the image 1110 and the screen 1101.

In an embodiment, the electronic device 101 may display a screen 1130 partially overlapping the screen 1101 and including a visual object 1123 through the display 260. In an embodiment, description of a visual object 223 and a screen 230 may be substantially identically applied to the description of the visual object 1123 and the screen 1130.

In an embodiment, the electronic device 101 may receive an input to a partial region 1125 of the screen 1130. For example, the partial region 1125 may include a region within the screen 1130, excluding a region corresponding to the visual object 1123. The input may include, as a non-limiting example, a swipe input that moves to the left side or the right side based on the illustration of FIG. 11.

Referring to an example 1151, the electronic device 101 may control the display 260 such that the screen 1130 is changed to a screen 1140 in response to an input to the partial region 1125.

In an embodiment, the screen 1140 may include selectable objects 1131, and may include a visual object 1141 for storing information (e.g., a tag) for corresponding to the selected object and classifying the image in association with the image 1110. The tag may be included in text information corresponding to the image 1110.

In an embodiment, in response to receiving an input for the visual object 1141, the electronic device 101 may store a tag corresponding to an activated object among the selectable objects 1131 in association with the image 1110. For example, the electronic device 101 may store the tag in association with a gallery application for accessing the image 1110. In this case, images in which the tag is stored may be retrieved or classified in the gallery application. For example, the electronic device 101 may store the tag in metadata of the image 1110.

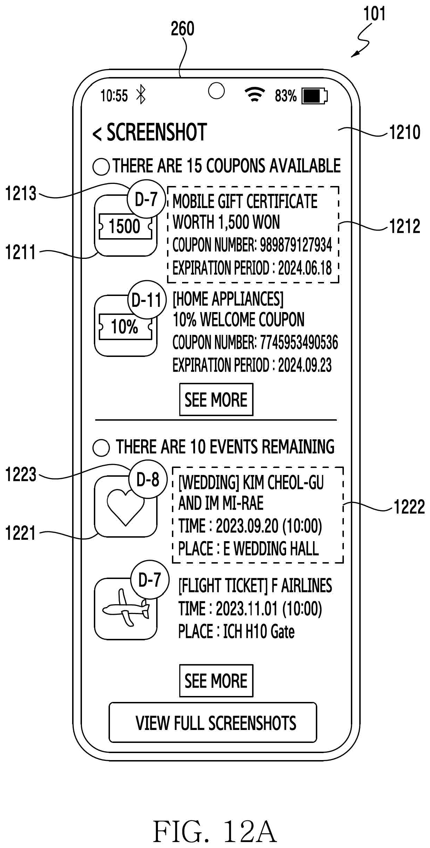

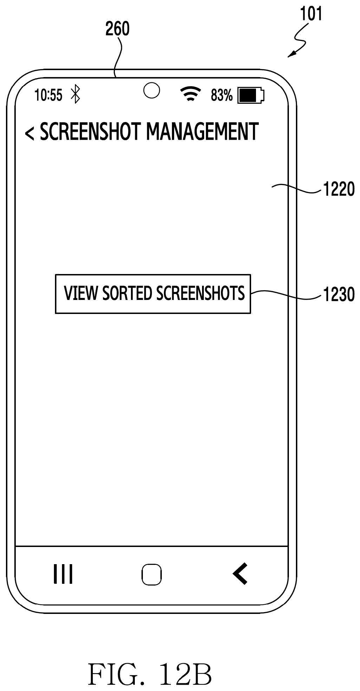

FIGS. 12A and 12B illustrate an example of an exemplary screen of an electronic device according to an embodiment. An electronic device 101 of FIGS. 12A and 12B may be an example of the electronic device 101 of FIG. 1. For example, a display 260 may include the display module 160 of FIG. 1.

In FIGS. 12A and 12B, screens 1210 and 1220 displayed through the display 260 of the electronic device 101 are illustrated. The screens 1210 and 1220 may include, for example, an execution screen of an application for managing an image and text information corresponding to the image. As a non-limiting example, the application may include a first application 901.

Referring to FIG. 12A, in an embodiment, the screen 1210 may represent a list of images classified for each category. For example, the screen 1210 may include images (e.g., an image 1211) corresponding to a coupon category and visual objects (e.g., an object 1212 representing information of a coupon corresponding to the image and an object 1213 representing an expiration date of the coupon) based on at least a portion of text information on the images. For example, the screen 1210 may include images (e.g., an image 1221) corresponding to a schedule category and visual objects (e.g., an object 1222 representing information on a schedule corresponding to the image and an object 1223 representing a remaining time until the schedule) based on at least a portion of text information on the images. In an embodiment, it has been described that categories designated for each image are determined based on the text information, but are not limited thereto. For example, by setting of a user, a category of an image whose category has not been determined may be determined, or the category of an image determined based on the text information may be changed. Thereafter, when determining the category of the image using the text information, the electronic device 101 may reflect details in which the category is set or changed by the user. For example, based on text information of a specific image (e.g., the image 210 of FIG. 2A), the electronic device 101 may determine a category of the specific image as a first category (e.g., a coupon). Thereafter, the category of the specific image may be changed to a second category (e.g., a schedule) different from the first category by the user. Thereafter, the electronic device 101 may determine a category of an image that is the same as or similar to the specific image as the second category.

In an embodiment, the electronic device 101 may provide a notification based on text information of an image by using the application corresponding to the screen 1210. The notification function may be provided based at least in part on behavior information of the user, which is stored in the electronic device 101, analyzed by the electronic device 101, or detected by the electronic device 101. The behavior information of the user may be obtained by analyzing information recorded in various applications of the electronic device 101, for example, a wallet, a calendar, or the like, and/or information detected using a sensor (e.g., the sensor module 176 of FIG. 1) of the electronic device 101, but is not limited thereto. For example, in a case that a deadline corresponding to an image is imminent, the electronic device 101 may provide the user with a notification. For example, the image is a coupon, and the user may use the coupon mainly on weekends. By analyzing such behavior information of the user, the electronic device 101 may provide a notification of a deadline of the coupon on the weekend before an expiration date, not the day before the expiration date of the coupon. For another example, it may detect that a location of the electronic device 101 is adjacent to a place (e.g., a place of use of a coupon or a predetermined place) corresponding to the image, and may provide it as a notification.

In FIG. 12A, an example in which images divided for each category are displayed is illustrated, but it is not limited thereto. For example, the electronic device 101 may identify common text information from a plurality of images corresponding to the same category and/or different categories. The electronic device 101 may classify and display images having the common text information into a new category or a subcategory. For example, the electronic device 101 may classify images that are due in a specific period (e.g., a day, a week, or a month) into a subcategory. For example, the electronic device 101 may classify images available in a specific place (e.g., a specific store) into a subcategory. Accordingly, the user may conveniently manage and use the coupon.

Referring to FIG. 12B, the screen 1220 may include a visual object 1230 for viewing classified screenshots. For example, the electronic device 101 may display the screen 1210 of FIG. 12A in response to an input to the visual object 1230. For another example, in response to the visual object 1230, an icon for displaying the screen 1210 may be generated on a home screen of the electronic device 101.

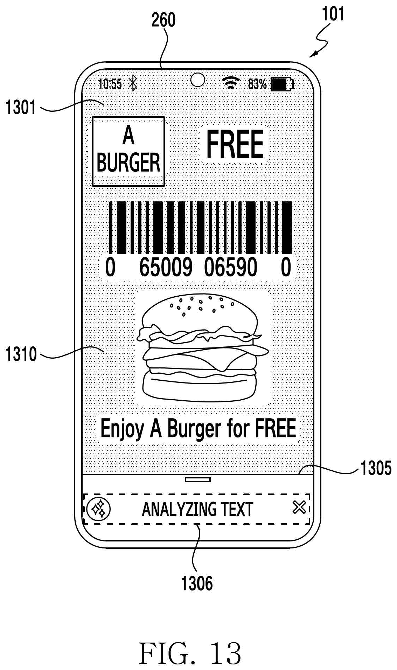

FIG. 13 illustrates an example of an exemplary screen of an electronic device according to an embodiment. An electronic device 101 of FIG. 13 may be an example of the electronic device 101 of FIG. 1. For example, a display 260 may include the display module 160 of FIG. 1.

Referring to FIG. 13, the electronic device 101 may display a screen 1301 including an image 1310 through the display 260. Description of an image 210 and a screen 201 may be substantially identically applied to the description of the image 1310 and the screen 1301.

In an embodiment, the electronic device 101 may display a screen 1305 on the screen 1301 through the display 260 by partially overlapping. In an embodiment, the screen 1305 may include a visual object 1306 for notifying that text is being analyzed.

Referring to FIG. 2B together, the screen 1305 may be displayed before the screen 220 and the screen 230 are displayed. For example, referring to FIG. 2A together, in an embodiment, the electronic device 101 may display the screen 1305 in response to an input of the visual object 206 for analyzing the image 210. In an embodiment, the electronic device 101 may control the display 260 to change and display the screen 1305 to the screen 220 based on obtaining the text information corresponding to the image 210.

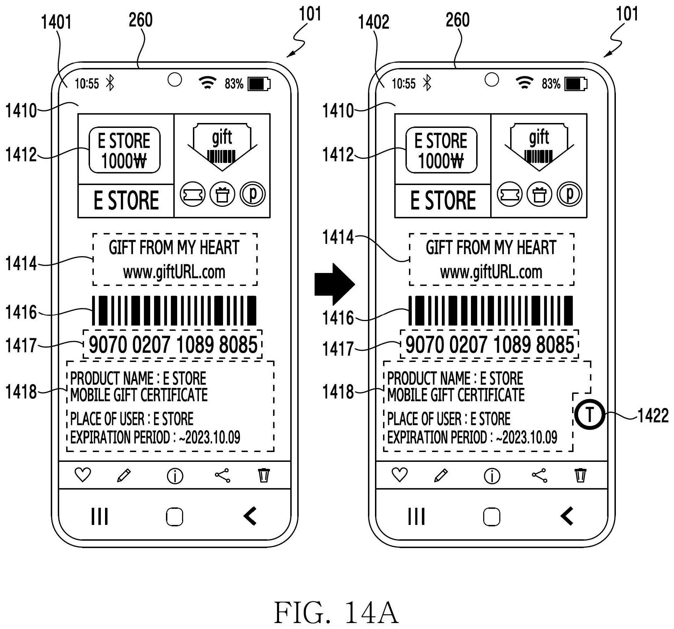

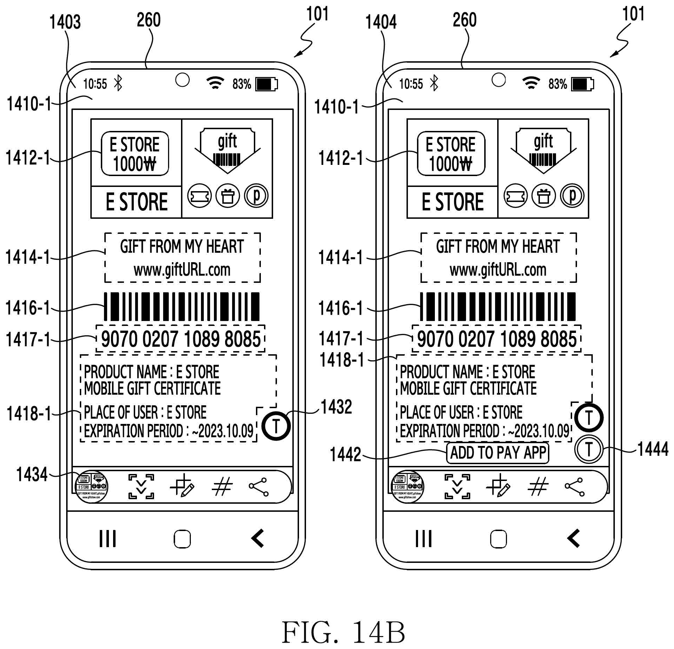

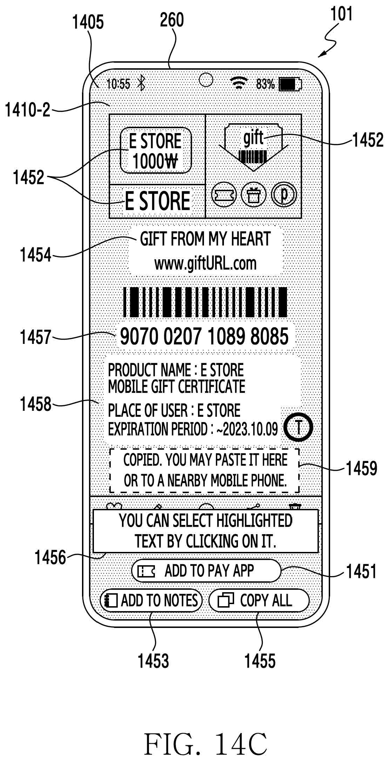

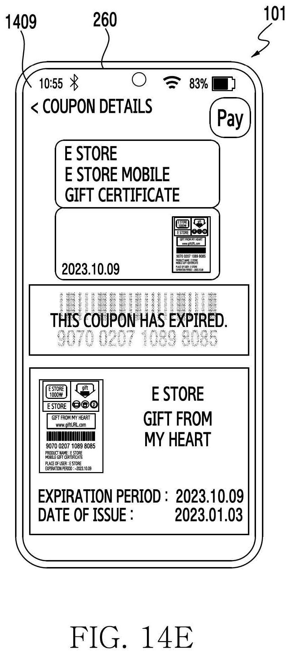

FIGS. 14A, 14B, 14C, 14D, and 14E illustrate examples of a screen displayed by an electronic device according to an embodiment. In FIGS. 14A, 14B, 14C, 14D, and 14E, screens 1401, 1402, 1403, 1404, 1405, 1406, 1407, 1408, and 1409 displayed through a display 260 of an electronic device 101 are illustrated.

Referring to FIG. 14A, the electronic device 101 may display the first screen 1401 through the display 260. The first screen 1401 may include an execution screen of an application for playing, managing, and editing an image and a video stored in the electronic device 101 (e.g., the memory), for example, a gallery application. The first screen 1401 may include an image 1410. The image 1410 may be an image pre-stored in the memory of the electronic device 101. For example, the image 1410 selected by a user from among a plurality of images stored in the electronic device 101 may be displayed through the first screen 1401. In an embodiment, the image 1410 may include a coupon image. The image 1410 may include a plurality of image objects. For example, the image 1410 may include a plurality of image objects 1412, 1414, 1416, 1417, and 1418. The objects 1412, 1414, 1417, and 1418 may include objects corresponding to text, and the object 1416 may include an object corresponding to non-text. Such as 'E STORE', the object 1412 may indicate a place of issuance of the coupon or a place of use of the coupon. In addition, the object 1412 may indicate a value of a benefit provided by the coupon, such as '1000'. Such as 'A gift from my heart', for example, the object 1414 may indicate a characteristic (e.g., a gift) of the coupon. Such as 'www.giftURL.com', for example, the object 1414 may indicate a website address of a place of issuance or a place of use of the coupon. The object 1416 may indicate a barcode image for the coupon, and the object 1417 may indicate a barcode number for the coupon. The object 1418 may include, for example, information on a name, a place of use, and an expiration period of a product provided by the coupon. However, information included in the image 1410 is not limited by the above-described example.

In an embodiment, the electronic device 101 may display the second screen 1402 through the display 260 after the first screen 1401 is displayed. The second screen 1402 may include the image 1410 and a visual object 1422.

In an embodiment, the visual object 1422 may be an object for providing a character recognition result for the image 1410. For example, the electronic device 101 may receive a user input to the visual object 1422. The electronic device 101 may display a character recognition result for the image 1410 in response to a user input to the visual object 1422. For example, the electronic device 101 may display the fifth screen 1405 of FIG. 14C indicating the character recognition result on the image 1410. Character recognition of image objects included in the image 1410 may be performed, for example, in response to a user input to the visual object 1422. For another example, character recognition of image objects included in the image 1410 may be performed in response to displaying the first screen 1401 including the image 1410 regardless of the input to the visual object 1422. In an embodiment, the electronic device 101 may extract text included in the image 1410 by performing character recognition on the image 1410.

Referring to FIG. 14B, the electronic device 101 according to an embodiment may display the third screen 1403 through the display 260. The third screen 1403 may include a capture image of the first screen 1401 or the second screen 1402. For example, the third screen 1403 may include an image 1410-1 that is substantially the same as the image 1410 displayed through the first screen 1401 or the second screen 1402. For example, the image 1410-1 may include visual objects 1412-1, 1414-1, 1416-1, 1417-1, and 1418-1 that are substantially the same as the visual objects 1412, 1414, 1416, 1417, and 1418 of the image 1410 of the first screen 1401 or the second screen 1402.

In an embodiment, in a case that the third screen 1403 is a capture image of the second screen 1402, the third screen 1403 may include an image object 1432 corresponding to the visual object 1422 of the second screen 1402. In a case that the third screen 1403 is a capture image of the first screen 1401, unlike the illustration, the third screen 1403 may not include the image object 1432 corresponding to the visual object 1422 of the second screen 1402. In an embodiment, the third screen 1403 may include a menu 1434 for editing or sharing the captured image 1410-1, or generating a tag on the image 1410-1.

In an embodiment, after displaying the third screen 1403, the electronic device 101 may display the fourth screen 1404 through the display 260. The fourth screen 1404 may include the image 1410-1, a visual object 1442, and a visual object 1444. In an embodiment, within the fourth screen 1404, it is illustrated that the visual object 1442 and the visual object 1444 are overlappingly displayed on the image 1410-1, but are not limited thereto. For example, the visual object 1442 and/or the visual object 1444 may be displayed in a region within the fourth screen 1404 separated from the image 1410-1.

In an embodiment, the visual object 1444 (e.g., the visual object 206 of FIG. 2A) may be an object for providing a character recognition result for the image 1410-1. For example, the electronic device 101 may receive a user input to the visual object 1444. The electronic device 101 may display a character recognition result for the image 1410-1 in response to a user input to the visual object 1444. For example, the electronic device 101 may display the fifth screen 1405 of FIG. 14C indicating the character recognition result on the image 1410-1. Character recognition of image objects included in the image 1410-1 may be performed, for example, in response to a user input to the visual object 1444. For another example, character recognition of image objects included in the image 1410-1 may be performed in response to displaying the third screen 1403 or the fourth screen 1404 including the image 1410-1 regardless of the input to the visual object 1444. In an embodiment, the electronic device 101 may extract text included in the image 1410-1 by performing character recognition on the image 1410-1.

In an embodiment, the electronic device 101 may obtain text information including a category, content, and a summary of the content of the image 1410-1 using the text extracted from the image 1410-1. For example, the electronic device 101 may obtain the text information based on receiving a user input to the visual object 1422 of the second screen 1402 or obtaining the image 1410-1 (e.g., obtaining a capture image of the first screen 1401 or the second screen 1402).

In an embodiment, the visual object 1442 (e.g., the visual object 223 of FIG. 2B) may be an object for executing an application corresponding to a category of the image 1410-1. For example, the electronic device 101 may determine an application corresponding to a category of the image 1410-1 and display the visual object 1442 for executing the determined application by using the text information of the image 1410-1. In an embodiment, the electronic device 101 may execute the application corresponding to a category of the image 1410-1 in response to receiving a user input to the visual object 1442. For example, the electronic device 101 may display an execution screen (e.g., the first execution screen 1406 of FIG. 14D) of the application corresponding to a category of the image 1410-1 in response to receiving a user input to the visual object 1442. The application may include, for example, a payment application or a wallet application capable of storing, managing, and using a coupon corresponding to the image 1410-1.

Referring to FIG. 14C, in an embodiment, the electronic device 101 may display the fifth screen 1405 through the display 260. For example, the electronic device 101 may display the fifth screen 1405 in response to a user input to the visual object 1422 of the second screen 1402 or the visual object 1444 of the fourth screen 1404.

In an embodiment, the fifth screen 1405 may include an image 1410-2 in which text included in image objects included in the image 1410 or the image 1410-1 is highlighted. For example, the electronic device 101 may display the image 1410-2 using the text extracted from the image 1410 or the image 1410-1. For example, in the image 1410-2, text 1452 included in the image object 1412 or the image object 1412-1, text 1454 included in the image object 1414 or the image object 1414-1, text 1457 included in the image object 1417 or the image object 1417-1, and text 1458 included in the image object 1418 or the image object 1418-1 may be highlighted and displayed. In the illustrated example, an example in which texts in the image 1410-2 are displayed brighter than the surroundings is illustrated, but is not limited by the illustrated example. For example, visual objects corresponding to non-text may be displayed as blurred.

In an embodiment, the fifth screen 1405 may include visual objects 1451, 1453, 1455, and 1456. For example, the visual objects 1451, 1453, and 1455 may be displayed in a region within the fifth screen 1405 separated from the image 1410-2. For example, the image 1410-2 being displayed may be reduced and displayed on the top of the fifth screen 1405, and the visual objects 1451, 1453, and 1455 may be displayed on the bottom of the fifth screen 1405, but are not limited thereto.

In an embodiment, the visual object 1451 (e.g., the visual object 1442) may be for executing the payment application corresponding to a category of the image 1410-2 (e.g., the image 1410 or the image 1410-1). In an embodiment, the visual object 1456 may indicate that texts in the image 1410-2 may be selected.

In an embodiment, the visual object 1453 may be for executing an application different from the application executed by the visual object 1451, for example, a note application. In an embodiment, the electronic device 101 may execute the note application based on texts selected in the image 1410-2 based on a user input to the visual object 1453. For example, although not illustrated, the electronic device 101 may display a note (or a page) in a state in which texts selected in the image 1410-2 are inputted as an execution screen of the note application based on a user input to the visual object 1453.

In an embodiment, the visual object 1455 may be for copying all text in the image 1410-2. In an embodiment, in response to a user input to the visual object 1455, the electronic device 101 may copy all of texts in the image 1410-2 (or store them in a region of the memory of the electronic device 101 that is temporarily stored, such as a clipboard), and display a visual object 1459. The visual object 1459 may indicate an action that may be performed by an input to the visual object 1455, such as 'Copied. You may paste it here or to a nearby mobile phone'. The visual object 1459 may be displayed for a designated time (e.g., several seconds).

Referring to FIGS. 14A, 14B, and 14D, the electronic device 101 according to an embodiment may display the first execution screen 1406 of the payment application corresponding to a category of the image 1410 or the image 1410-1. For example, the first execution screen 1406 may include a loading screen of the payment application. For example, the first execution screen 1406 may include an icon 1461 of the payment application.

In an embodiment, the electronic device 101 may execute the payment application based on the text identified in the image 1410-1 of the fourth screen 1404, based on a user input to the visual object 1442 of the fourth screen 1404. For example, the electronic device 101 may display the first execution screen 1406 of the payment application in response to a user input to the visual object 1442 of the fourth screen 1404. After displaying the first execution screen 1406, the electronic device 101 may display an image 1480 including at least a portion of the image 1410-1 and the third execution screen 1408 in a state in which texts identified in the image 1410-1 are inputted as an execution screen of the payment application for storing a coupon corresponding to the image 1410-1. For example, in an input field 1486 of the third execution screen 1408, a product name based on text identified in the image object 1418 may be inputted. For example, in an input field 1487, a 'barcode' that is a coupon type of the image 1410-1 may be inputted. For example, in an input field 1488, a barcode number based on text identified in the image object 1417 may be inputted.

In an embodiment, the electronic device 101 may execute the payment application based on text selected from among text identified in the image 1410-2 (e.g., the images 1410 or 1410-1) of the fifth screen 1405 based on a user input to the visual object 1451 of the fifth screen 1405. For example, the electronic device 101 may display the first execution screen 1406 of the payment application in response to a user input to the visual object 1451 of the fifth screen 1405. After displaying the first execution screen 1406, the electronic device 101 may display the image 1480 including at least a portion of the image 1410-1 and the third execution screen 1408 in a state in which texts selected in the image 1410-2 are inputted as an execution screen of the application for storing a coupon corresponding to the image 1410-2. For example, a product name of the text 1458 may be inputted into the input field 1486 of the third execution screen 1408. For example, in the input field 1487, a 'barcode' that is a coupon type of the image 1410-1 may be input. For example, in the input field 1488, the same barcode number as the text 1457 may be inputted.

Additionally or optionally, the electronic device 101 may display the second execution screen 1407 after displaying the first execution screen 1406 and before displaying the third execution screen 1408. The second execution screen 1407 may include a visual object 1473 (e.g., a crop tool) for designating a region of the image 1410-1 to be attached in the third execution screen 1408 and a visual object 1471 for completing a region designation for the image 1410-1. For example, the user may designate a specific region of the image 1410-1 in the visual object 1473 by changing a size of a border of the visual object 1473. The visual object 1473 is illustrated in a quadrangle shape, but is not limited thereto. In an embodiment, the electronic device 101 may display the third execution screen 1408 to which the image 1480 corresponding to a specific region of the image 1410-1 is attached, designated by the visual object 1473, in response to a user input to the visual object 1471.

In an embodiment, the third execution screen 1408 may include a visual object 1481 for storing inputted coupon information and a visual object 1483 for canceling storage of coupon information.

In an embodiment, the electronic device 101 may store coupon information inputted through the third execution screen 1408 based on an input to the visual object 1481, and display the fourth execution screen 1409 indicating the stored coupon information. The fourth execution screen 1409 may include coupon information such as, for example, a name of the coupon, a product name provided by the coupon, a brand of a coupon provider, a coupon code (e.g., an identification number or a barcode number of the coupon), content provided by the coupon, a start date and time, an expiration date and time, a usage method, and a restriction, but is not limited thereto. The fourth execution screen 1409 may indicate state information of the stored coupon, such as whether it expires.

FIG. 15 is an exemplary block diagram illustrating a generative artificial intelligence system according to an embodiment. In FIG. 15, an exemplary artificial intelligence system including a User Query/Response Interface 1510, an AI framework 1520, a Generative AI Model 1530, knowledge repositories 1540, and an application/service component 1550 is illustrated. According to an embodiment, a processor (e.g., the processor 120 of FIG. 1) of an electronic device (e.g., the electronic device 101 of FIG. 1) may execute one or more programs distinguished by the blocks of FIG. 15 to execute functions related to generative artificial intelligence.

In an embodiment, the User Query/Response Interface 1510 may receive a user input. The user input may be in a form such as natural language, an image, and/or a video. In addition, when transmitting the user input, context information may also be transmitted. The context information may include various supplementary information at a time of the user input. For example, the context information may include information about an application currently used by a user or information about a location of the user. The user input may also be in a mixed form of the above-described natural language, image, sound, and context information. In addition, the user input may be in a non-natural language form, such as selecting a menu. The User Query/Response Interface 1510 may output a result of the generative artificial intelligence system to the user. The output may be in a form of natural language or specific content, and may also be provided in a form of an action requested by the user. The User Query/Response Interface 1510 may output a result of the generative artificial intelligence system to the user. The output may be in a form of natural language or specific content, and may also be provided in a form of an action requested by the user.

The AI framework 1520 may receive the user input and may coordinate and control each component necessary to perform an intention of the user based on a user query. The AI framework 1520 may include a prompt design component 1521, an API/plug-in management component 1522, and a refinery component 1523.

The user input received from the User Query/Response Interface 1510 may be transmitted to the prompt design component 1521. The prompt design component 1521 may be used to generate a prompt suitable for inputting the user input into an LLM or a Large Multimodal Model (LMM). The prompt design component 1521 may be an AI component that uses machine learning algorithms or neural networks to develop better prompts over time. Based on the user input, the prompt design component 1521 may generate a prompt by accessing the knowledge repositories 1540 including user preference data, prompt libraries, and prompt examples, and may deliver the generated prompt to the LLM or the LMM.

The API/plug-in management component 1522 may perform a role of communicating with external information when there is a request for additional information while delivering the user input as an input to the generative model. The API/plug-in management component 1522 may establish a channel capable of communicating with the outside of the AI framework 1520 through an application programming interface (API), and may allow access to various data sources through the established channel. In addition, when an action for ultimately performing the user input, rather than an intermediate result, needs to be performed in the application/service component 1550 (e.g., the program 140 or the application 146 of FIG. 1), the API/plug-in management component 1522 may request the corresponding action through the API. Information obtained from the outside may be used with the user input to generate a prompt in the prompt design component 1521, or may be delivered as input to the generative model.

The refinery component 1523 (or an output modification component) may finely tune a result output from the Generative AI Model 1530. For example, the refinery component 1523 may verify whether content generated through the LLM and/or the LMM is irrelevant, contains biased content, or contains harmful content. In addition, the refinery component 1523 may also determine to what extent the output matches a desired result of the user, and in a case that an additional process is required, may perform the additional process. The refinery component 1523 may additionally configure a hint to avoid undesired output and may provide it to the user.

The Generative AI Model 1530 may generally refer to an artificial intelligence neural network that generates new forms of data relying on user input information. The Generative AI Model 1530 may include a model that generates images and/or a model that generates language. Examples of models that generate images include, representatively, a generative adversarial network (GAN) and a variational auto encoder (VAE), and may further include a diffusion-based generative model using a VAE and a transformer architecture. A model that generates language may be a model trained to output a statistically most appropriate output value based on an input value, and representative examples thereof may include models such as CHAT-GPT 3 and CHAT-GPT 4. In addition, there may be large multimodal models (LMMs) capable of recognizing various forms of data input, such as text, images, and voice, and generate corresponding new data.

An electronic device (e.g., the electronic device 101 of FIG. 1) according to an embodiment may include a display (e.g., the display module 160 of FIG. 1), memory (e.g., the memory 130 of FIG. 1) storing instructions, and a processor (e.g., the processor 120 of FIG. 1). The instructions, when executed by the processor, may cause the electronic device to display, through the display, a still image including one or more image objects corresponding to text. The instructions, when executed by the processor, may cause the electronic device to, based on an input for analyzing the still image being displayed, obtain text information corresponding to the one or more image objects of the still image. The instructions, when executed by the processor, may cause the electronic device to select a designated application corresponding to the still image from among a plurality of applications, using at least a portion of the text information. The instructions, when executed by the processor, may cause the electronic device to display a screen including a visual object for executing the designated application and the still image through the display. The instructions, when executed by the processor, may cause the electronic device to, in response to an input related to the visual object, display an execution screen of the designated application through the display.

In an embodiment, the instructions, when executed by the processor, may cause the electronic device to, in response to an input for the visual object, execute a function of the designated application for the still image.

In an embodiment, the instructions, when executed by the processor, may cause the electronic device to store at least some text of the text information or another text related to the at least some text in association with the designated application.

In an embodiment, the instructions, when executed by the processor, may cause the electronic device to provide a notification through the designated application based on the at least some text.

In an embodiment, the instructions, when executed by the processor, may cause the electronic device to classify the still image into one or more of a plurality of categories based at least in part on the text information.

In an embodiment, the electronic device may include a communication circuit. The instructions, when executed by the processor, may cause the electronic device to obtain, through the communication circuit, additional information retrieved through an external server based at least in part on the text information. The instructions, when executed by the processor, may cause the electronic device to store the additional information in association with at least some text of the text information.

In an embodiment, the still image may further include another image object corresponding to non-text. The instructions, when executed by the processor, may cause the electronic device to store an image corresponding to the another image object in association with the designated application.

In an embodiment, the another image object may include an image code.

In an embodiment, the text information may include location information. The designated application may include a map application. The instructions, when executed by the processor, may cause the electronic device to execute the map application based at least in part on the location information.

In an embodiment, the instructions, when executed by the processor, may cause the electronic device to select a first application from among the plurality of applications as the designated application based at least in part on the text information including a first designated text. The instructions, when executed by the processor, may cause the electronic device to select a second application different from the first application from among the plurality of applications as the designated application based at least in part on the text information including a second designated text different from the first designated text.

In an embodiment, the instructions, when executed by the processor, may cause the electronic device to display, through the display, the screen further including another visual object indicating that at least a portion of the still image corresponds to a coupon image or a ticket image.

In an embodiment, the instructions, when executed by the processor, may cause the electronic device to display the screen further including another visual object indicating that at least a portion of the still image corresponds to a map image.

In an embodiment, the instructions, when executed by the processor, may cause the electronic device to obtain the text information from the still image based on a user input.

In an embodiment, the instructions, when executed by the processor, may cause the electronic device to obtain the still image through a capture application.

In an embodiment, the electronic device may include a communication circuit. The instructions, when executed by the processor, may cause the electronic device to transmit the still image to an external server through the communication circuit. The instructions, when executed by the processor, may cause the electronic device to, after the transmission of the still image, receive, through the communication circuit, at least a portion of the text information from the external server.

In an embodiment, an image training model for a plurality of images may be stored in the memory. The instructions, when executed by the processor, may cause the electronic device to generate at least a portion of the text information by applying the still image to the image training model.

In an embodiment, the still image may include a coupon image. The text information may include coupon information included in the coupon image. The designated application may include an application for managing coupons. The instructions, when executed by the processor, may cause the electronic device to, in response to the input related to the visual object, execute a function of the designated application based at least in part on the coupon information.

In an embodiment, the instructions, when executed by the processor, may cause the electronic device to identify whether the designated application is installed in the electronic device. The instructions, when executed by the processor, may cause the electronic device to, in a case that the designated application is installed in the electronic device, display the visual object for executing the designated application with the still image. The instructions, when executed by the processor, may cause the electronic device to, in a case that the designated application is not installed in the electronic device, display another visual object for executing another application for installing the designated application with the still image.

An electronic device (e.g., the electronic device 101 of FIG. 1) according to an embodiment may include a display (e.g., the display module 160 of FIG. 1), memory (e.g., the memory 130 of FIG. 1) storing instructions, and a processor (e.g., the processor 120 of FIG. 1). The instructions, when executed by the processor, may cause the electronic device to display, through the display, a screenshot image. The instructions, when executed by the processor, may cause the electronic device to, based on an input for analyzing the screenshot image being displayed, obtain text information corresponding to the screenshot image. The instructions, when executed by the processor, may cause the electronic device to, based on identifying an application corresponding to the screenshot image using the text information, display a window including a visual object for executing the application, through the display, partially overlapping the screenshot image. The instructions, when executed by the processor, may cause the electronic device to, based on identifying an application corresponding to the screenshot image using the text information, in response to an input related to the visual object, display an execution screen of the application through the display.

In an embodiment, the instructions, when executed by the processor, may cause the electronic device to extract text corresponding to an image object included in the screenshot image. The instructions, when executed by the processor, may cause the electronic device to obtain the text information from an artificial intelligence model into which the extracted text is inputted.

In an embodiment, the screenshot image may include another image object corresponding to non-text. The instructions, when executed by the processor, may cause the electronic device to obtain the text information from the artificial intelligence model into which the another image object and the extracted text are inputted.

In an embodiment, the electronic device may include a communication circuit (e.g., the communication module 190 of FIG. 1). The instructions, when executed by the processor, may cause the electronic device to extract text corresponding to an image object included in the screenshot image. The instructions, when executed by the processor, may cause the electronic device to transmit the extracted text to a server (e.g., the server 108 of FIG. 1) through the communication circuit. The instructions, when executed by the processor, may cause the electronic device to, after the transmission of the extracted text, receive the text information from the server through the communication circuit.

In an embodiment, the electronic device may include the communication circuit. The instructions, when executed by the processor, may cause the electronic device to, in response to the input for analyzing the screenshot image, transmit the screenshot image to the server through the communication circuit. The instructions, when executed by the processor, may cause the electronic device to, after the transmission of the screenshot image, receive the text information from the server through the communication circuit.

In an embodiment, the text information may include category information of the screenshot image, content information, and summary information on the content information.

In an embodiment, the instructions, when executed by the processor, may cause the electronic device to display, through the display, the window further including an object representing the category information.

In an embodiment, the instructions, when executed by the processor, may cause the electronic device to display, through the display, the window further including an object representing the summary information.

In an embodiment, the instructions, when executed by the processor, may cause the electronic device to display, through the display, another window that includes the category information and has a first size, partially overlapping the screenshot image. The instructions, when executed by the processor, may cause the electronic device to, in response to an input to the another window, display, through the display, the window that has a second size greater than the first size, partially overlapping the screenshot image.

In an embodiment, the instructions, when executed by the processor, may cause the electronic device to receive an input for capturing a screen being displayed through the display. The instructions, when executed by the processor, may cause the electronic device to, in response to the input for capturing the screen, obtain the screenshot image.

In an embodiment, the instructions, when executed by the processor, may cause the electronic device to store information for classifying the screenshot image, in association with the application using the text information.

In an embodiment, the instructions, when executed by the processor, may cause the electronic device to store information for classifying the screenshot image in metadata of the screenshot image using the text information.

In an embodiment, the instructions, when executed by the processor, may cause the electronic device to execute the application based on the text information.

In an embodiment, the screenshot image may include a coupon image. The text information may include coupon information included in the coupon image. The application may include an application for managing coupons. The instructions, when executed by the processor, may cause the electronic device to, in response to the input related to the visual object, execute the application based at least in part on the coupon information.

In an embodiment, the screenshot image may include an image representing a specific area. The text information may include location information corresponding to the image representing the specific area. The application may include a map application. The instructions, when executed by the processor, may cause the electronic device to, in response to the input related to the visual object, execute the map application based at least in part on the location information.

In an embodiment, the instructions, when executed by the processor, may cause the electronic device to identify whether the application is installed in the electronic device. The instructions, when executed by the processor, may cause the electronic device to, in a case that the application is installed in the electronic device, display the window including the visual object for executing the application. The instructions, when executed by the processor, may cause the electronic device to, in a case that the application is not installed in the electronic device, display a window including another visual object for executing another application for installing the application, partially overlapping the screenshot image.

In an embodiment, the instructions, when executed by the processor, may cause the electronic device to display, through the display, another screenshot image different from the screenshot image. The instructions, when executed by the processor, may cause the electronic device to, based on an input for analyzing the another screenshot image, obtain other text information corresponding to the another screenshot image. The instructions, when executed by the processor, may cause the electronic device to display, through the display, a window corresponding to the another screenshot image identified using the other text information and including another visual object for executing another application different from the application, partially overlapping the another screenshot image. The instructions, when executed by the processor, may cause the electronic device to, in response to an input related to the another visual object, display, through the display, an execution screen of the another application.

In an embodiment, the screenshot image may include a coupon image. The another screenshot image may include an image representing a specific area.

An electronic device (e.g., the electronic device 101 of FIG. 1) according to an embodiment may include a display (e.g., the display module 160 of FIG. 1), memory (e.g., the memory 130 of FIG. 1) storing instructions, and a processor (e.g., the processor 120 of FIG. 1). The instructions, when executed by the processor, may cause the electronic device to display a first screen including an image through the display. The instructions, when executed by the processor, may cause the electronic device to extract text from the image by performing optical character recognition (OCR). The instructions, when executed by the processor, may cause the electronic device to obtain text information corresponding to the image from an artificial intelligence model into which the extracted text is inputted. The instructions, when executed by the processor, may cause the electronic device to identify a category of the image using the text information. The instructions, when executed by the processor, may cause the electronic device to, based on identifying an application corresponding to the identified category, display a second screen that includes the image and a visual object for executing the application. The instructions, when executed by the processor, may cause the electronic device to, in response to an input related to the visual object, display a third screen different from the second screen by executing the application.

In an embodiment, the electronic device may include a communication circuit (e.g., the communication module 190 of FIG. 1). The instructions, when executed by the processor, may cause the electronic device to transmit, through the communication circuit, the extracted text to a server (e.g., the server 108 of FIG. 1) including the artificial intelligence model. The instructions, when executed by the processor, may cause the electronic device to receive, through the communication circuit, the text information from the server.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display;
memory storing instructions; and
a processor,
wherein the instructions, when executed by the processor, cause the electronic device to:
display, through the display, a still image including one or more image objects corresponding to text;
based on an input for analyzing the still image being displayed, obtain text information corresponding to the one or more image objects of the still image;
select a designated application corresponding to the still image from among a plurality of applications, using at least a portion of the text information;
display a screen including a visual object for executing the designated application and the still image through the display; and
in response to an input related to the visual object, display an execution screen of the designated application through the display.

2. The electronic device of claim 1,
wherein the instructions, when executed by the processor, cause the electronic device to:
in response to an input for the visual object, execute a function of the designated application for the still image.

3. The electronic device of claim 1,
wherein the instructions, when executed by the processor, cause the electronic device to:
store at least some text of the text information or another text related to the at least some text in association with the designated application.

4. The electronic device of claim 3,
wherein the instructions, when executed by the processor, cause the electronic device to:
provide a notification through the designated application based on the at least some text.

5. The electronic device of claim 1,
wherein the instructions, when executed by the processor, cause the electronic device to:
classify the still image into one or more of a plurality of categories based at least in part on the text information.

6. The electronic device of claim 3,
comprising a communication circuit,
wherein the instructions, when executed by the processor, cause the electronic device to:
obtain, through the communication circuit, additional information retrieved through an external server based at least in part on the text information; and
store the additional information in association with at least some text of the text information.

7. The electronic device of claim 1,
wherein the still image further includes another image object corresponding to non-text, and
wherein the instructions, when executed by the processor, cause the electronic device to:
store an image corresponding to the another image object in association with the designated application.

8. The electronic device of claim 7,
wherein the another image object includes an image code.

9. The electronic device of claim 1,
wherein the text information includes location information, and
the designated application includes a map application, and
wherein the instructions, when executed by the processor, cause the electronic device to:
execute the map application based at least in part on the location information.

10. The electronic device of claim 1,
wherein the instructions, when executed by the processor, cause the electronic device to:
select a first application from among the plurality of applications as the designated application based at least in part on the text information including a first designated text; and
select a second application different from the first application from among the plurality of applications as the designated application based at least in part on the text information including a second designated text different from the first designated text.

11. The electronic device of claim 1,
wherein the instructions, when executed by the processor, cause the electronic device to:
display, through the display, the screen further including another visual object indicating that at least a portion of the still image corresponds to a coupon image or a ticket image.

12. The electronic device of claim 1,
wherein the instructions, when executed by the processor, cause the electronic device to:
display the screen further including another visual object indicating that at least a portion of the still image corresponds to a map image.

13. The electronic device of claim 11,
wherein the instructions, when executed by the processor, cause the electronic device to:
obtain the text information from the still image based on a user input.

14. The electronic device of claim 1,
wherein the instructions, when executed by the processor, cause the electronic device to:
obtain the still image through a capture application.

15. The electronic device of claim 1,
comprising a communication circuit,
wherein the instructions, when executed by the processor, cause the electronic device to:
transmit the still image to an external server through the communication circuit; and
after the transmission of the still image, receive, through the communication circuit, at least a portion of the text information from the external server.
